# EUROPÄISCHE PATENTSCHRIFT

(11) **EP 1 024 096 B1**
(45) Veröffentlichungstag und Bekanntmachung des Hinweises auf die Patenterteilung: **12.05.2004**
(21) Anmeldenummer: 00101118.8
(22) Anmeldetag: 21.01.2000
(51) Int. Cl.: B65G 1/137, G06F 17/60

(54) **Logistiksystem für den Versand und/oder den Empfang von Transportgut sowie Geräte zum Auslesen von Daten aus einem oder mehreren Datenspeichern und/oder Einschreiben von Daten in einen oder mehrere Datenspeicher zur Anwendung in solchen Logistiksystemen**
Logistical system for shipping and receiving goods,devices,for reading data from one or more data storing devices and/or writing data in one or more data storing devices,used in such a logistical system
Système logistique pour l'expédition et la réception de produits, dispositifs, pour la lecture des données d'une ou plusieures mémoires de données et/ou l'écriture de données dans une mémoire de données , utilisés dans ce système logistique

(30) Priorität: 27.01.1999 DE 19903240
(43) Veröffentlichungstag der Anmeldung: 02.08.2000
(73) Patentinhaber: AEG Identifikationssysteme GmbH, 89077 Ulm (DE)
(72) Erfinder: Bloch, Werner, 73054 Eislingen (DE); Lange, Henri, 89233 Neu-Ulm (DE); Baeger, Holm, Dr., 89134 Blaustein (DE)
(74) Vertreter: Weber, Gerhard, Dipl.-Phys.

(56) Entgegenhaltungen:
- EP-A- 0 179 308
- CH-A- 687 819
- FR-A- 2 692 699
- US-A- 5 113 349
- US-A- 5 260 694
- US-A- 5 959 568
- PATENT ABSTRACTS OF JAPAN vol. 014, no. 276 (M-0984), 14. Juni 1990 (1990-06-14) & JP 02 081898 A (TOYOTA AUTOM LOOM WORKS LTD), 22. März 1990 (1990-03-22)

## Beschreibung

Logistiksystem für den Versand und/oder den Empfang von Transportgut sowie Geräte zum Auslesen von Daten aus einem oder mehreren Datenspeichern und/oder Einschreiben von Daten in einen oder mehrere Datenspeicher zur Anwendung in solchen Logistiksystemen.

### Beschreibung

Die Erfindung betrifft ein Logistiksystem für den Versand und/oder den Empfang von Transportgut sowie Geräte zum Auslesen von Daten aus einem oder mehreren Datenspeichern und/oder Einschreiben von Daten in einen oder mehrere Datenspeicher zur Anwendung in solchen Logistiksystemen.

Logistiksysteme werden in zunehmendem Maße in dem Bereich der Warendistribution eingesetzt, um den Warenumschlag und den Weg der einzelnen Waren im Detail erfassen und auswerten zu können und um eine möglichst effiziente Lagerhaltung, insbesondere bei Massenwaren erreichen zu können.

Die bisherigen Systeme basieren weitestgehend auf manuellen Verfahren, bei denen parallel zum Warenumschlag in einem papier- und/oder computergestützten Warenumschlagverwaltungssystem die umgeschlagenen Waren erfaßt und verwaltet werden. Die Erfassung des Warenumschlags wird bei diesem System durch Personen bewerkstelligt, die entweder mit Hilfe von von ihnen geführten Papierlisten und/oder mit Hilfe von manuell bedienbaren Erfassungsgeräten, wie z.B. manuell bedienbaren Barcode-Lesern, die umgeschlagenen Waren erfassen. Dies bedeutet, daß zusätzlich zu den originären Transportarbeiten des Warenumschlags auch noch zusätzliche Erfassungsarbeiten anfallen, die den Warenumschlag erheblich verlangsamen und ineffizient machen.

Dies macht sich vor allem beim Umschlag von konfektionierten Massengütern, wie z.B. Getränkebehältern, Chemikalienbehältern, Lebensmittelbehältern, Aromagrundstoffbehältern usw. nachteilig bemerkbar.

Es sind daher Logistiksysteme entwickelt worden, bei denen der Warenumschlag weitgehend automatisch erfaßt wird. Bei diesen Systemen werden die zu erfassenden Waren mit Datenspeichern versehen, in welchen jeweils die einzelnen Waren kennzeichnende Daten, wie z.B. Herstellungs-Nummer, Herstellungs-Datum, Warentyp, usw. abgespeichert werden oder, alternativ hierzu, jeweils eine eindeutige Waren- oder Behälternummer abgespeichert wird. Im Rahmen der letzteren Lösung sind dann weitere kennzeichnende Daten der jeweiligen Ware bzw. des jeweiligen Warenbehälters wie z. B. Herstellungs-Datum, Herstellungs-Nr., Warentyp usw. in einem zentralen Datenspeicher gespeichert und dort mit der entsprechenden (und ebenfalls in diesem zentralen Datenspeicher abgespeicherten) Waren- bzw. Behälternummer logisch verknüpft und für weitere Operationen verfügbar. Diese in den Datenspeichern gespeicherten Daten können dann bei Bedarf von speziellen Lesegeräten, die mit den betreffenden Waren bzw. Behältern zumindest zeitweilig in Wirkverbindung treten, in dieser Zeit wieder ausgegeben werden. Ferner ist es möglich, mit speziellen Schreibgeräten oder mit kombinierten Lese-/Schreibgeräten weitere die jeweiligen Waren kennzeichnende Daten in die Datenspeicher der Waren einzuschreiben.

Diese automatischen Lese- und/oder Schreibgeräte sind beispielsweise an bestimmten Stellen in den Produktions- und/oder Lagerhallen fest installiert, dergestalt, daß die hergestellten oder zu lagernden Waren einzeln automatisch an Geräten vorbeigeführt werden, so daß bei dieser Gelegenheit die Behälternummer und/oder die anderen im Kennungsspeicher gespeicherten, kennzeichnenden Daten der betreffenden Waren ausgegeben bzw. neue Daten eingeschrieben werden können, so daß eine weitgehende automatische Erfassung der umgeschlagenen Waren im allgemeinen möglich ist.

Aus der WO 97/49972 A2 ist ein Warenumschlagsystem bekannt, bei welchem jedes Objekt einen eigenen Objekt-Kennungsspeicher enthält, in welchem Identifikationsdaten und gegebenenfalls weitere Daten auslesbar enthalten sind. Wesentlich ist, dass die Objekt-Kennungsspeicher nicht nur passiv durch ein Lesegerät abfragbar sind, sondern auch untereinander kommunizieren können, so dass eine Suchabfrage nach einem Objekt über mehrere Stationen unter Zwischenschaltung anderer Kennungsspeicher erfolgen kann. Container, welche eine Mehrzahl von Objekten enthalten, können einen eigenen Container-Kennungsspeicher enthalten, welcher über Kommunikationsverbindungen zu den Objekt-Kennungsspeicher und zwischen diesen die Suche nach einem Objekt innerhalb des Containers ermöglicht. Innerhalb des Systems können zusätzlich Einrichtungen zur Ortsbestimmung und Distanzmessung vorgesehen sein. Die Abfrage einzelner Objekt-Kennungsspeicher oder Container-Kennungsspeicher kann mittels Überwachungseinrichtungen, welche mit lokalen oder zentralen Computern verbunden sein können, erfolgen. Für die Kommunikationsverbindungen zwischen zwei Kennungsspeichem muss wenigstens einer der beteiligten Kennungsspeicher eine eigene elektrische Energiequelle besitzen.

Diese Verfahren stoßen jedoch dann an ihre Grenze, wenn mehrere nebenund/oder übereinander angeordneten Waren als komplette Transportguteinheiten an den Lese- und/oder Schreibgeräten vorbeigeführt werden. Infolge von Abschattungseffekten sind hier nicht alle Kennungsspeicher der zu erfassenden Waren den Lese- und/oder Schreibgeräten zugänglich, so daß eine manuelle Nacherfassung der nicht erfaßten Waren notwendig ist. Dies ist zeitraubend und kostenintensiv, da zunächst festgestellt werden muß, welche Waren von den Lese- und/oder Schreibgeräten bereits erfaßt worden sind, und anschließend die nicht erfaßten Waren manuell nacherfaßt werden müssen.

Besonders kritisch ist dies z. B. in der Getränkeindustrie beim Umschlag von Fässern oder faßähnlichen Behältern, sogenannten Kegs. Die Kegs sind standardisierte Behälter mit einem Volumen von z.B. 30 Liter oder 50 Liter. Sie bestehen aus Metall und weisen oben einen Metall- oder Kunststoffkragen mit einem oder zwei Handgriffen auf. Sie sind jeweils mit einem Transponder versehen, in dem die Keg-Nummer und/oder andere waren- bzw. produktionsspezifische Daten abgespeichert sind. Die einzelnen Kegs werden in den Abfüllanlagen der Brauerei- bzw. Brunnenbetriebe abgefüllt und über Lesestationen, die mit den zugehörigen Transpondern für kurze Zeit in Wirkverbindung stehen, identifiziert und erfaßt. Die von den Lesestationen ausgelesenen Daten werden anschließend in einem zentralen Kennungsspeicher abgespeichert. Nach ihrer Erfassung durch die Lesestationen werden die Kegs auf Paletten gruppiert, wobei auch hier mehrere standardisierte Gruppengrößen verwendet werden; es gibt z.B. Gruppen mit sechs Kegs á 30 Liter oder á 50 Liter auf einer Palette oder Gruppen mit zweimal bzw. dreimal sechs Kegs á 30 Liter oder á 50 Liter, die in zwei bzw. drei Ebenen übereinander auf einer Palette gestapelt sind, wobei auf jeder Palette immer nur Kegs mit dem gleichen Volumen, d.h. mit den gleichen äußeren Abmessungen verwendet werden, damit die Kegs auf der Palette selbst bzw. volle Paletten übereinander gestapelt werden können. Bei der Beladung der realen Paletten werden in dem zentralen Datenspeicher die Daten der Kegs einer realen Palette oder ggf. mehrerer realer Paletten zu sogenannten virtuellen oder logischen Paletten zusammengefaßt, so daß nach Identifikation eines Kegs einer solchen virtuellen oder logischen Palette auf der realen Palette auch die restlichen Kegs dieser realen Palette über die zugehörige virtuelle oder logische Palette bestimmbar und somit bekannt sind.

Die reale Paletten mit den abgefüllten Kegs werden anschließend gelagert. Das Lager stellt die jeweils aktuelle Gesamtheit aller abgefüllten, aber noch nicht ausgelieferten Kegs bzw. aller vorhandenen, aber noch nicht ausgelieferten virtuellen oder logischen Paletten dar.

Mit Gabelstaplern, die in der Regel mit Einfach-, Zweifach- oder Dreifach-Gabelpaaren (auch Klammern genannt) versehen sind, werden die abgefüllten Kegs palettenweise umgeschlagen, d.h. je nach Bestellung der einzelnen Abnehmer als komplette Transportguteinheit aus dem Lager genommen oder in Teilen aus dem Lager genommen und außerhalb des Lagers zu Transportguteinheiten zusammengestellt, die auf Lastkraftwagen verladen werden, die die Transportguteinheiten zu den Abnehmern transportieren. Um eine Zuordnung der einzelnen aus dem Lager entnommenen Kegs bzw. Paletten zu den jeweiligen Abnehmern vornehmen zu können, müssen die Daten der entnommenen Kegs bzw. Paletten erfaßt werden. Dies stößt im allgemeinen auf Schwierigkeiten, da die Gabelstapler in der Regel gleichzeitig mehrere nebeneinander und übereinander gestapelte reale Paletten transportieren, so daß hier bei einer solchen Transportfahrt lediglich die oberste Lage der realen Paletten bzw. Kegs den zuvor beschriebenen stationären Lesestationen zugänglich ist, während die darunterliegenden Lagen infolge der Abschattung nicht automatisch identifiziert werden können. Dies muß im Bedarfsfall dann mit großem Aufwand und kosten- und zeitintensiv manuell nachgeholt werden.

Ähnliche Probleme treten im Beispielfall auch bei der Erfassung und Lagerung des von den Abnehmern zurückgesandten Leerguts auf.

Die Aufgabe der Erfindung besteht daher darin, zum einen ein Logistiksystem anzugeben, mit dem ohne Zeitverlust und ohne zusätzliche manuelle Erfassungsarbeiten Transportgut in seiner Waren- bzw. Objektzusammensetzung vollständig erfaßt werden kann, und zum anderen Lese- oder Schreib- oder Lese-/Schreibgeräte zu schaffen, die sich für den Einsatz in einem solchen Logistiksystem eignen und möglichst kostengünstig in der Herstellung und im Betrieb sind und mit deren Hilfe das zu schaffende Logistiksystem möglichst effizient betrieben werden kann.

Die erfindungsgemäße Lösung der Aufgabe ist in Bezug auf das zu schaffende Verfahren durch die Merkmale des Patentanspruchs 1 wiedergegeben und in Bezug auf die zu schaffenden Geräte durch die Merkmale des Patentanspruchs 5 bzw. die Merkmale des Patentanspruchs 7 wiedergegeben. Die übrigen Ansprüche enthalten vorteilhafte Aus- und Weiterbildungen des erfindungsgemäßen Logistiksystems (Ansprüche 2 bis 4) und der erfindungsgemäßen Geräte (Ansprüche 6 sowie 8 bis 28) sowie eine bevorzugte Anwendung der Erfindung (Anspruch 29).

Die dem erfindungsgemäßen Logistiksystem zugrundeliegende Erkenntnis besteht darin, die einzelnen Waren (im folgenden "Objekte" genannt) des zu versendenden oder des empfangenen Transportguts nicht, wie bisher, vor oder nach dem Transport des Transportguts innerhalb des Warenumschlagplatzes zu erfassen, sondern während des Transports des Transportguts mit einem sich auf dem Warenumschlagsplatz bewegenden Transportgerät, z.B. einem Gabelstapler oder einem ferngesteuerten führerlosen Transportfahrzeug.

Die hierzu notwendigen Geräte zum Auslesen von Daten aus einem oder mehreren Datenspeichern und/oder zum Einschreiben von Daten in einen oder mehrere Datenspeicher ("Lesegeräte oder Schreibgeräte oder Lese-/Schreibgeräte") sind zweckmäßigerweise stationär am Transportweg oder noch vorteilhafter direkt am Transportgerät angeordnet.

Der wesentliche Vorteil des erfindungsgemäßen Logistiksystems besteht darin, daß die Erfassung des Objekts des Transportguts während des Transports, d.h. während der Fahrt des Transportgeräts vollautomatisch erfolgt und zusätzliche Stand- bzw. Erfassungszeiten entfallen, so daß der normale Betriebsablauf durch die Erfassung der umzuschlagenden Waren/Objekte bzw. des umzuschlagenden Transportguts nicht gestört bzw. verzögert wird.

Ein weiterer Vorteil des erfindungsgemäßen Logistiksystems ist darin zu sehen, daß alle Waren/Objekte des Transportguts während des Transports vollautomatisch identifiziert werden können.

Der dem erfindungsgemäßen Lese- oder Schreib- oder Lese-/Schreibgerät gemäß Anspruch 5 zugrundeliegender Gedanke besteht darin, daß der mit dem Gerät verbundene Lese- oder Schreib- oder Lese/Schreibkopf (im folgenden werden die einzelnen Ausführungsvarianten dieses Kopfes zusammenfassend als "Meßkopf" bezeichnet) am Ende eines Meßauslegers befestigt ist, der in seiner Länge zwischen einer minimalen und maximalen Länge beliebig oder in vorgegebenen Zwischenwerten einstellbar ist, so daß der Meßkopf durch Variation der Länge des Meßauslegers jeweils in eine Position gefahren werden kann, in der er mit den einzelnen Objekten des Transportguts in Wirkverbindung treten und die in dem Datenspeicher des jeweiligen Objekts gespeicherten Daten auslesen und/oder neue Daten in den Datenspeicher einschreiben kann.

In einer bevorzugten Ausführungsform ist der Meßausleger horizontal ausgerichtet, so daß der Meßkopf bei übereinandergestapelten Paletten zwischen den einzelnen Palettenlagen in das Transportgut eingefahren werden kann, um auch mit Objekten der unteren Lagen in Wirkverbindung treten zu können.

Besonders vorteilhaft ist es, wenn der Meßausleger dabei in einer Ebene senkrecht zu seiner horizontalen Ausrichtung entlang einer ersten Achse (z.B. - bei horizontaler Ausrichtung der Paletten - der vertikalen Raumachse) und/oder einer hierzu senkrechten zweiten Achse (z.B. der horizontalen Raumachse in dieser Verschiebungsebene) bewegt werden kann. Mit dieser Anordnung ist es möglich, den Meßkopf nacheinander an verschiedenen Stellen in das Transportgut einzufahren (vorzugsweise in die durch die Paletten gebildeten Hohlräume zwischen den einzelnen übereinander gestapelten Palettenlagen), um mit den einzelnen Objekten des Transportguts in Wirkverbindung treten zu können. Liegen registrierte virtuelle oder logische Paletten vor, deren Daten komplett in einem zentralen Speicher abgespeichert sind, reicht es aus, wenn der Meßkopf jeweils mit einem Objekt (oder aus Redundanzgründen mit zwei Objekten) einer jeden realen Palette des Transportguts in Wirkverbindung tritt, um alle Objekte des Transportguts erfassen zu können. Diese seriellen Messungen können ohne Störung des Betriebsablaufs während des Transports des Transportguts vollautomatisch durchgeführt werden.

Eine Verkürzung der Erfassungszeit wird erreicht, wenn das Lese- oder Schreib- oder Lese-/Schreibgerät, wie in der erfindungsgemäßen Lösung gemäß Anspruch 7 angegeben, anstelle eines Meßkopfes mehrere Meßköpfe aufweist, die vorteilhafterweise zu mehreren Stücken in einer Ebene oder, im Bedarfsfall, in mehreren parallel ausgerichteten und übereinanderliegenden Ebenen angeordnet sind. Mit einer solchen Vorrichtung sind parallele oder parallel/serielle Messungen möglich.

Vorteilhafterweise sind die einzelnen Meßausleger als Teleskoparme ausgebildet, die zur Variation ihrer Länge beispielsweise mit Hilfe von elektromechanischen Spindelantrieben oder pneumatischen oder hydraulischen Antrieben oder mit Seil- oder Kettenzugantrieben oder mittels Stromschleppkettenantrieben aus- und eingefahren, d. h. in ihrer Länge variiert werden können.

Als besonders vorteilhaft hat es sich erwiesen, wenn der oder die Meßhalter während der Ruhezeiten, in denen kein Transportgut transportiert wird, mittels weiterer Antriebe in eine gemeinsame Ruheposition am Transportgerät gefahren werden. Im Falle, daß das Transportgerät ein Gabelstapler ist, ist es besonders zweckmäßig, alle Meßhalter in den Ruhezeiten in den oberen Teil der Klammern oder der Halterung für die Klammern oder in den ggf. vorhandenen Lasthalter zu fahren.

Als Datenspeicher auf den Objekten kommen beispielsweise Transponder in Betracht, die mit Hilfe von Meßköpfen in Form von Sende- oder Empfangsoder Sende-/Empfangsantennen auf induktivem Wege oder per Funkverbindung ausgelesen und/oder beschrieben werden können. Die Betriebsfrequenz kann z.B. im KHz-, MHz- oder GHz-Bereich liegen. Denkbar sind auch Datenspeicher in Form von Barcodestreifen oder Streifen mit Buchstaben- und/oder Ziffernfolgen, die mit Hilfe von Barcode-Lesern bzw. Mustererkennern oder mittels Videokameras ausgelesen werden können. Besonders vorteilhaft können die erfindungsgemäßen Geräte bei Transportgut eingesetzt werden, das sich aus mehreren nebeneinander und/oder übereinander gestapelten Paletten zusammensetzt, auf denen Objekte angeordnet sind, deren kennzeichnende Daten in einem zentralen Datenspeicher zu virtuellen oder logischen Paletten zusammengefaßt sind, weil in diesem Fall die Meßköpfe bei horizontaler Ausrichtung der Meßausleger bequem in die von den realen Paletten gebildeten freien Zwischenräumen gefahren werden können, um so auch die Objekte der unteren Lagen sicher und komplett erfassen zu können.

Im folgenden wird die Erfindung anhand der Figuren näher erläutert.
Dabei zeigt:
- Fig. 1:: das Ablaufschema einer bevorzugten Ausführungsform des erfindungsgemäßen Logistiksystems beim Warenumschlag von vollen Kegs,
- Fig. 2:: das Ablaufschema einer weiteren bevorzugten Ausführungsform des erfindungsgemäßen Logistiksystems beim Warenumschlag von leeren Kegs,
- Fig. 3:: schematisch verschiedene gebräuchliche Kombinationen von realen Paletten von Kegs, von der Seite betrachtet,
- Fig. 4:: ein Gabelstapler mit einer schematischen Darstellung von drei übereinander gestapelten realen Paletten mit Kegs, sowie von einer bevorzugten Ausführungsform des erfindungsgemäßen Geräts zum Auslesen und/oder Einschreiben von Daten,
- Fig. 5 u. 6:: zwei vorteilhafte Ausführungsformen des erfindungsgemäßen Gerätes zum Auslesen und/oder Einschreiben von Daten, die an einer Dreifachklammer eines Gabelstaplers angebracht sind, von vorn betrachtet,
- Fig. 7 u. 8:: die Ausführungsform des erfindungsgemäßen Geräts gemäß Fig. 5, von oben betrachtet (Fig. 7) und in einer horizontalen Zwischenebene betrachtet (Fig. 8), einschließlich der entsprechenden realen Paletten mit Kegs,
- Fig. 9:: eine Abwandlung der Ausführungsform gemäß Fig. 5, 7 und 8 mit zwei übereinandergestapelten realen Palettenlagen mit Kegs,
- Fig. 10 u. 11:: die Ausführungsform des erfindungsgemäßen Geräts gemäß Fig. 6, von oben betrachtet (Fig. 10) und in einer horizontalen Zwischenebene betrachtet (Fig.11), einschließlich der entsprechenden realen Paletten mit Kegs,
- Fig. 12:: eine Abwandlung der Anführungsform gemäß Fig. 6, 10 und 11 mit zwei übereinandergestapelten realen Palettenlagen mit Kegs,
- Fig. 13 u.: 14:zwei weitere vorteilhafte Ausführungsformen des erfindungsgemäßen Geräts zum Auslesen und/oder Einschreiben von Daten mit um eine horizontale Drehachse schwenkbaren Meßhalter (Fig. 13) und mit über einen Stromschleppkettenantrieb aus- und einfahrbaren Meßhalter (Fig. 14),
- Fig. 15:: eine andere vorteilhafte Ausführungsform des erfindungsgemäßen Geräts zum Auslesen und/oder Einschreiben von Daten, bei denen anstelle von in ihrer Länge variierbaren Meßhaltern kurze Meßhalter konstanter Länge verwendet werden.

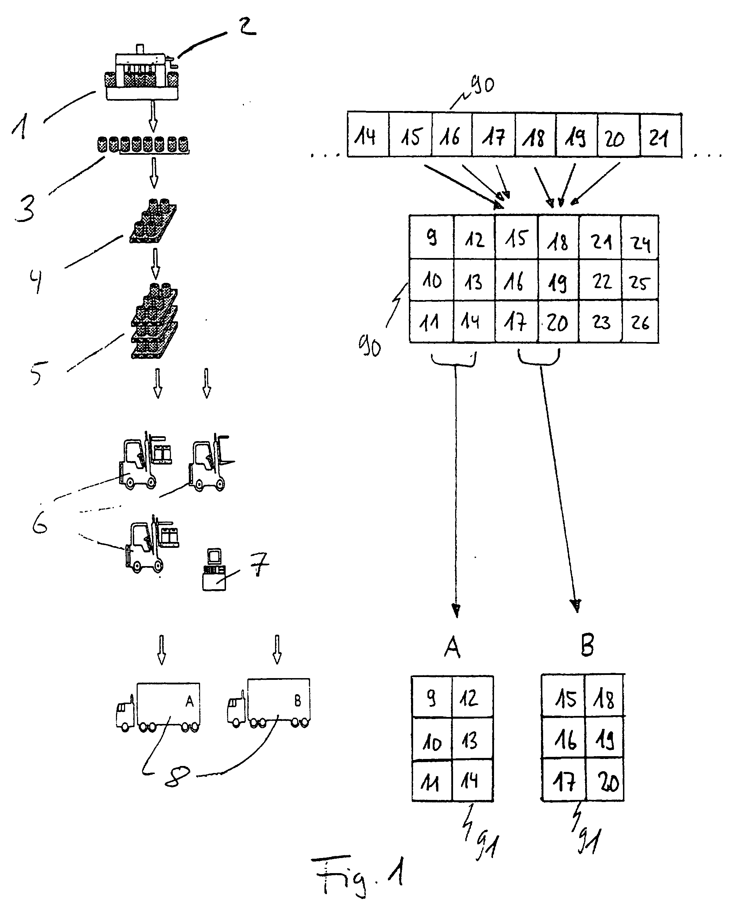

Das Ablaufschema des Logistiksystems in Fig. 1 zeigt die unterschiedlichen Stationen, die die einzelnen Kegs nach ihrer Befüllung beim Warenumschlag durchlaufen. Zunächst werden die Kegs 90, von denen hier beispielhaft die Nummern 9 bis 26 betrachtet werden, in der Abfüllstation 1 abgefüllt und die in ihren Datenspeichern abgespeicherten kennzeichnenden Daten (z.B. die Keg-Nummern 9 bis 26) in der Lesestation 2 ausgelesen und in einem (nicht gezeigten) zentralen Datenspeicher gespeichert. Die registrierten Kegs 90 werden vom Band genommen und auf einer Palettierungsstation 3 auf reale Paletten gruppiert (hier beispielhaft sechs Kegs pro Palette). Dabei werden palettenweise sogenannte virtuelle oder logische Paletten gebildet, indem die die einzelnen Kegs 90 einer realen Palette oder mehrerer realer Paletten kennzeichnenden Daten in dem zentralen Datenspeicher als Gruppe gespeichert und als Datengruppe (= virtuelle oder logische Palette) verfügbar gehalten werden. Die Kegs 90 werden anschließend in Station 4 im Vollgutlager gelagert. Zur Abarbeitung der einzelnen Bestellungen der Kunden A und B werden mittels Gabelstapler 6 die Kegs 90 palettenweise aus dem Vollgutlager 4 geholt, und zwar im Regelfall bereits als komplette Transportguteinheit 91. Im anderen Fall werden die Paletten mit den Kegs erst nach ihrer Entnahme aus dem Vollgutlager 4 zu solchen Transportguteinheiten 91 für die Lieferung an die Kunden A und B zusammengestellt. Während des Transports der realen Paletten mit den Kegs 90 vom Vollgutlager 4 zu den LKWs 8 der Kunden A und B wird auf oder am Gabelstapler 6 mit Hilfe von (nicht gezeigten) Lesegeräten pro realer Palette mindestens ein Keg 90 identifiziert. Durch Vergleich mit dem Datenbestand im (nicht gezeigten) zentralen Datenspeicher werden anschließend über die Zuordnung der identifizierten Kegs 90 zu den abgespeicherten virtuellen oder logischen Paletten alle Kegs 90 auf dem Gabelstapler 6 identifiziert und über einer Dateneingabe 7 den einzelnen Kunden A oder B zugeordnet und diese Zuordnung im zentralen Datenspeicher abgespeichert. Damit ist eine Zuordnung der einzelnen ausgelieferten Kegs 90 zu den belieferten Kunden A oder B geschaffen, und der Abfüllbetrieb kann jederzeit feststellen, bei welchem Kunden A oder B sich die einzelnen ausgelieferten Kegs 90 befinden.

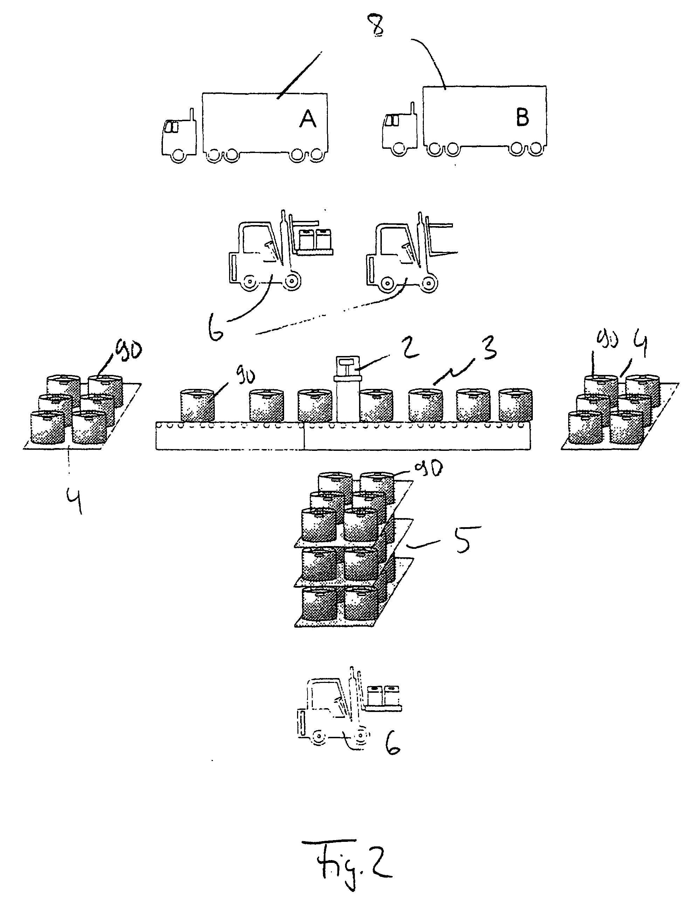

Fig. 2 zeigt ein entsprechendes Ablaufschema des Logistiksystems beim Warenumschlag von von den Kunden an den Abfüllbetrieb zurückgelieferten leeren Kegs.

Die leeren Kegs 90 werden auf den LKWs 8 von den Kunden A oder B angeliefert. Mit Hilfe von Gabelstaplern 6 werden die Kegs 90 palettenweise vom LKW 8 genommen. Während des Transports zum Leergutlager wird am Gabelstapler 6 mittels eines nicht gezeigten Lesegeräts mindestens ein Keg 90 pro realer Palette identifiziert, indem die entsprechenden, ihn kennzeichnenden Daten aus seinem Datenspeicher ausgelesen werden. Die vom Gabelstapler 6 auf realen Paletten 4 angelieferten leeren Kegs 90 werden in einer Registrierstation 3 mittels eines Lesegeräts 2 registriert und anschließend wieder auf reale Paletten 4 gepackt und in einem Leergutlager 5 gelagert; entsprechend werden auch hier parallel zur Lagerung virtuelle oder logische Paletten in der zuvor beschriebenen Weise im zentralen Datenspeicher gebildet. Damit ist durch den Vergleich der am Gabelstapler 6 identifizierten Kegs 90 mit den Daten der virtuellen oder logischen Paletten eine Zuordnung der einzelnen zurückgelieferten Kegs 90 zu den Kunden möglich, die die leeren Kegs angeliefert hatten, um z. B. die Leihgebühren für die Kegs zu berechnen, die sich in ihrer Höhe z. B. nach der Dauer der Ausleihzeit richten können. Die bekannte Zuordnung der einzelnen Kegs zu den Kunden kann natürlich auch zu anderen Auswertungszwecken verwendet werden. Aus dem Leergutlager 5 werden anschließend mittels Gabelstapler 6 reale Paletten 4 mit leeren Kegs 90 entnommen und zum Abfüllen zur nicht gezeigten Abfüllstation gefahren. Dabei wird wieder während des Transports mindestens ein Keg pro realer Palette von einem Lesegerät am Gabelstapler identifiziert, so daß durch anschließenden Vergleich mit im zentralen Datenspeicher abgespeicherten virtuellen Paletten eine Identifizierung aller von den einzelnen Kunden A und B zurückgelieferten leeren Kegs 90 für weitere Zwecke möglich ist. Auf diese Weise kann u. a. auch der Weg der einzelnen Kegs 90 mühelos vom Abfüllen über das Vollgutlager zum Kunden und vom Kunden über das Leergutlager bis zum erneuten Abfüllen verfolgt werden, wobei die Erfassung der Kegs parallel zum normalen Betriebsablauf erfolgt und keine zusätzlichen Erfassungszeiten hierzu erforderlich sind.

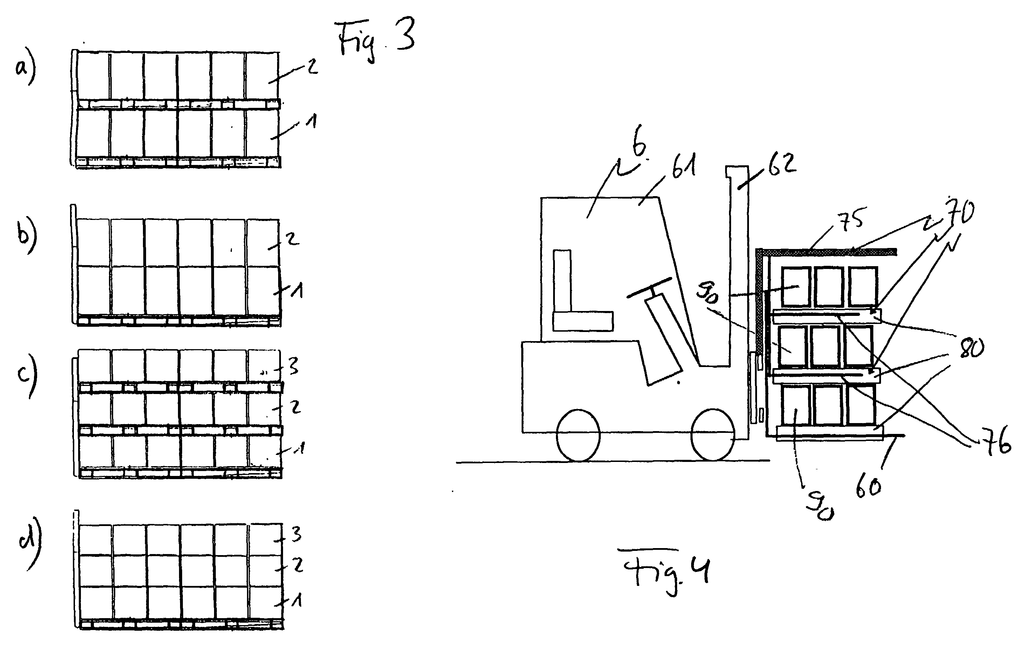

Fig. 3 zeigt schematische Beispiele von realen Palettenkombinationen, wie sie typischerweise von Gabelstaplern in Abfüllbetrieben transportiert werden, und zwar von der Seite. Die Gabelstapler sind üblicherweise mit einer Einfach- oder Zweifach- oder Dreifachklammer ausgerüstet, so daß sie dementsprechend die einfache, zweifache oder dreifache Anzahl der in Fig.3 gezeigten realen Paletten transportieren können.
Fig. 3a zeigt insgesamt vier reale Paletten, auf denen jeweils sechs Kegs à 50 Liter stehen (drei der sechs Kegs sind in Fig. 3a jeweils gezeigt, die anderen drei Kegs befinden sich hinter den drei jeweils gezeigten Kegs). Die realen Paletten sind in zwei Ebenen 1 und 2 übereinander gestapelt, wobei eine Ebene jeweils zwei reale Paletten enthält. Fig. 3b unterscheidet sich von Fig. 3a lediglich dadurch, daß die obere Palettenebene fehlt und die betreffenden Kegs direkt auf die Kegs der darunterliegenden Palettenebene stehen.
Fig. 3c zeigt insgesamt sechs reale Paletten, auf denen jeweils sechs Kegs à 30 Liter stehen (drei der sechs Kegs sind in Fig. 3c jeweils gezeigt; die anderen drei Kegs befinden sich hinter den drei jeweils gezeigten Kegs). Die realen Paletten sind in drei Ebenen 1, 2 und 3 übereinander gestapelt, wobei eine Ebene jeweils zwei reale Paletten enthält. Fig. 3d unterscheidet sich von Fig. 3c lediglich dadurch, daß die beiden oberen Palettenebenen fehlen und die betreffenden Kegs direkt übereinander gestapelt sind und auf den Kegs der untersten Palettenebene stehen.

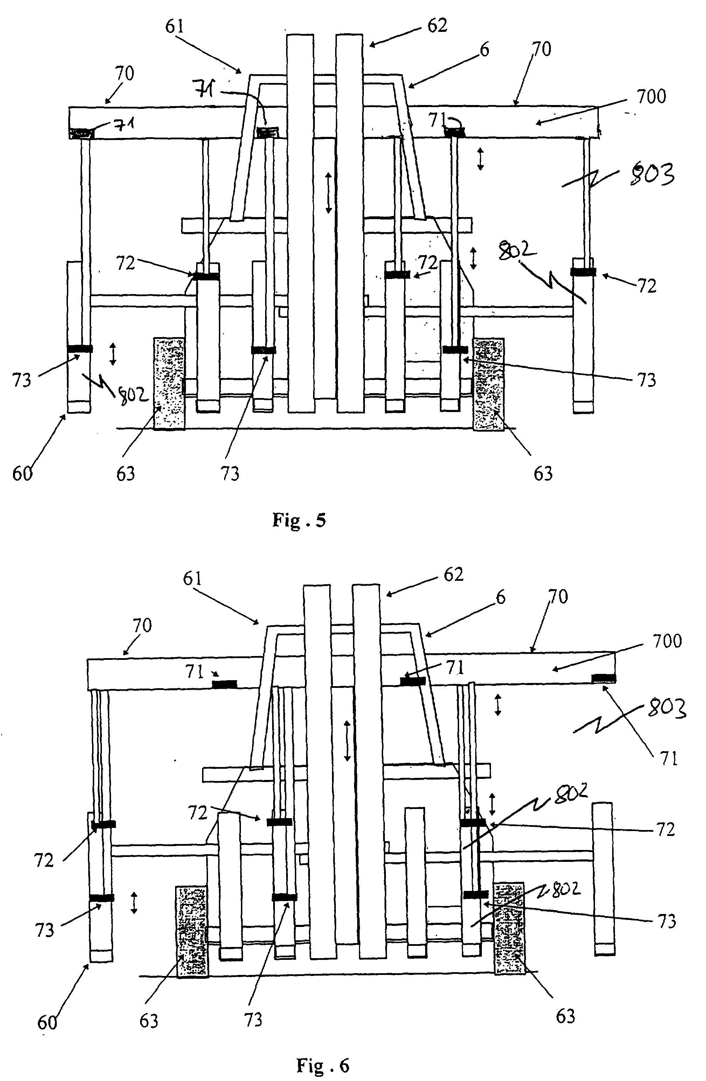

In Fig. 4 ist schematisch ein Gabelstapler 6 von der Seite gezeigt. Zu sehen ist die Kabine 61, der Halter 62 für die Klammern 60, sowie eine bevorzugte Ausführungsform des erfindungsgemäßen Lese- oder Schreib- oder Lese/Schreibgeräts 70, das ebenfalls an der Halterung 62 für die Klammer 60 befestigt ist und das Meßhalter 75, 76 in drei Ebenen aufweist, an denen sich entsprechende (nicht gezeigte) Lese- oder Schreib- oder Lese-/Schreibköpfe ("Meßköpfe") befinden. Die Meßhalter 76 in der untersten und mittleren Ebene ragen in die freien Zwischenräume der in drei Ebenen übereinandergestapelten realen Paletten 80 mit Kegs 90. Die Meßhalter 75 der obersten Ebene befinden sich über den Kegs 90 der obersten Palettenebene. Die Meßhalter 75, 76 der einzelnen Ebenen sind entweder alle oder zum Teil in ihrer Länge variierbar, wenn mehr als eine reale Palette in den jeweiligen Palettenebenen vorhanden ist. Befindet sich nur eine reale Palette in einer Palettenebene, können die Meßhalter in ihrer Länge fixiert sein, da nur ein Keg pro realer Palette identifiziert werden muß, um alle Kegs der realen Palette erfassen zu können, wie bereits weiter oben geschildert worden ist. Allerdings kann es zweckmäßig sein, die Meßhalter 76 der beiden unteren Ebenen in ihrer Länge variierbar auszugestalten, damit die Meßhalter 76 in der Ruheposition eine minimale Länge aufweisen, so daß das "Einfädeln" der Meßhalter 76 bei der Aufnahme der realen Paletten durch die Klammer 60 problemlos durchgeführt werden kann. In der oberen Ebene können die Meßköpfe 75 in ihrer Lage fixiert sein und direkt an dem ggf. bereits vorhandenen Lasthalter dergestalt angebracht werden, daß pro realer Palette in der obersten Ebene je ein Meßkopf 75 mit dem Datenspeicher von mindestens einem Keg pro realer Palette in Wirkverbindung treten kann.

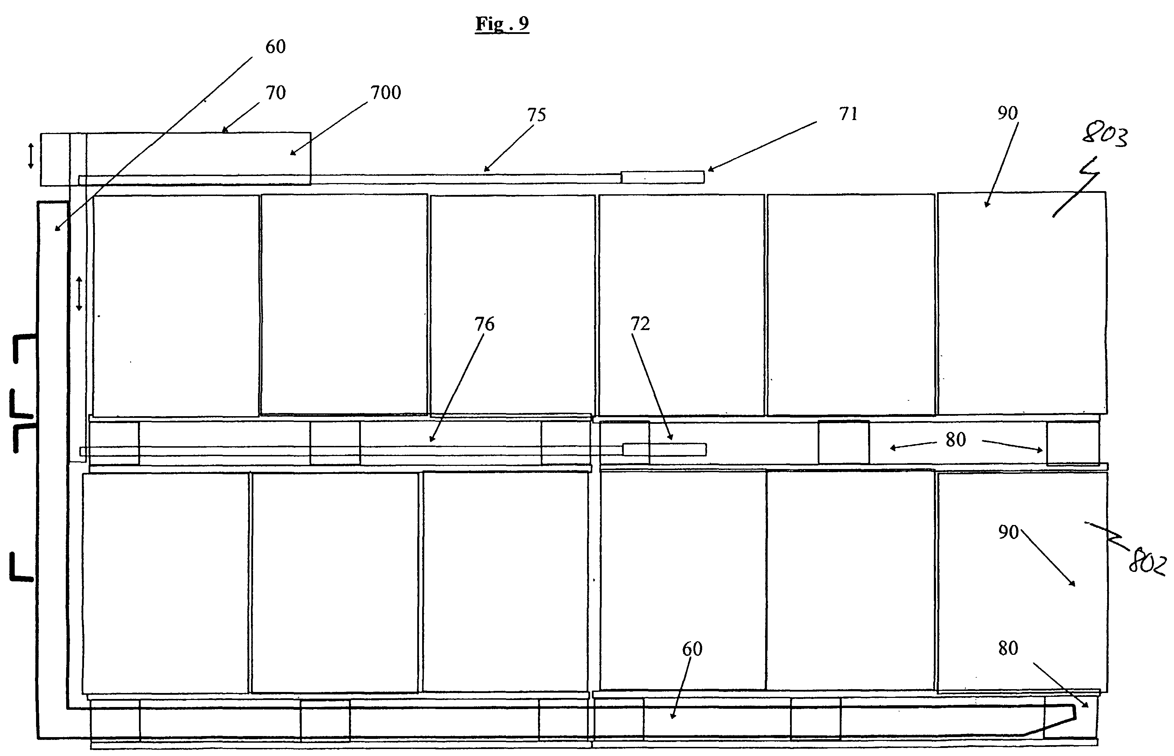

In Fig. 5, 7 und 8 ist ein bevorzugtes erstes Ausführungsbeispiel des erfindungsgemäßen Lese- oder Schreib- oder Lese-/Schreibgeräts gezeigt, in der Fig. 6. 10 und 11 ein bevorzugtes zweites Ausführungsbeispiels dieses Geräts. Beide Ausführungsbeispiele sind beispielhaft für drei übereinandergestapelte Palettenebenen 802, 803 mit je sechs realen Paletten 80, auf denen jeweils sechs Kegs 90 stehen, ausgelegt. Fig. 9 zeigt eine Abwandlung des Ausführungsbeispiels gemäß Fig. 5, 7 und 8, bei der anstelle von drei Palettenebenen 802, 803 lediglich zwei Palettenebenen 802, 803 vorgesehen sind. Mit 803 ist in Fig. 5 bis 15 jeweils die obere bzw. oberste Palettenebene bezeichnet, mit 802 jeweils die untere Palettenebene (bei zwei Ebenen insgesamt) oder die beiden unteren Palettenebenen (bei drei Palettenebenen insgesamt).

Fig. 5 zeigt einen Gabelstapler 6 ohne Last von vorn. Der Stapler 6 weist Räder 63, eine Fahrerkabine 61 sowie eine Dreifachklammer 60 auf, die an einer Halterung 62 des Staplers 6 befestigt ist. An der Halterung ist ferner ein Lese- oder Schreib- oder Lese-/Schreibgerät 70 befestigt, das in drei Ebenen 802, 803 je drei Meßköpfe 71, 72, 73 aufweist.

Wie die Doppelpfeile in der Figur andeuten, sind sowohl das Gerät 70 insgesamt als auch die Meßköpfe 72 und 73 der beiden unteren Ebenen relativ zu der Halterung 700 der Meßköpfe vertikal verschiebbar bzw. verstellbar. Diese Verstellbarkeit ist erforderlich, um die Meßkopfebene relativ zu den entsprechenden Palettenebenen 802, 803 einstellen zu können, damit die Meßköpfe 72 und 73 der beiden unteren Ebenen 802 problemlos in die freien Zwischenräume der realen Paletten einfahren können, um mit den Datenspeichern der einzelnen Kegs der realen Paletten der beiden unteren Palettenebenen 802 in Wirkverbindung treten zu können. Die Meßköpfe der drei Ebenen 802, 803 sind dabei über nicht gezeigte und horizontal ausgerichtete Meßhalter mit dem Gerät 70 verbunden, die in ihrer Länge zwischen einer minimalen und einer maximalen Länge beliebig oder in vorgegebenen Zwischenwerten einstellbar sind. Damit ist es möglich, die Meßköpfe mit dem Datenspeicher von mindestens einem Keg einer jeden realen Palette der aufgenommenen Transportguteinheit in Wirkverbindung zu bringen, wobei jeder Meßkopf Kegs von zwei in einer Palettenebene hintereinander angeordneten realen Paletten zu erfassen hat.

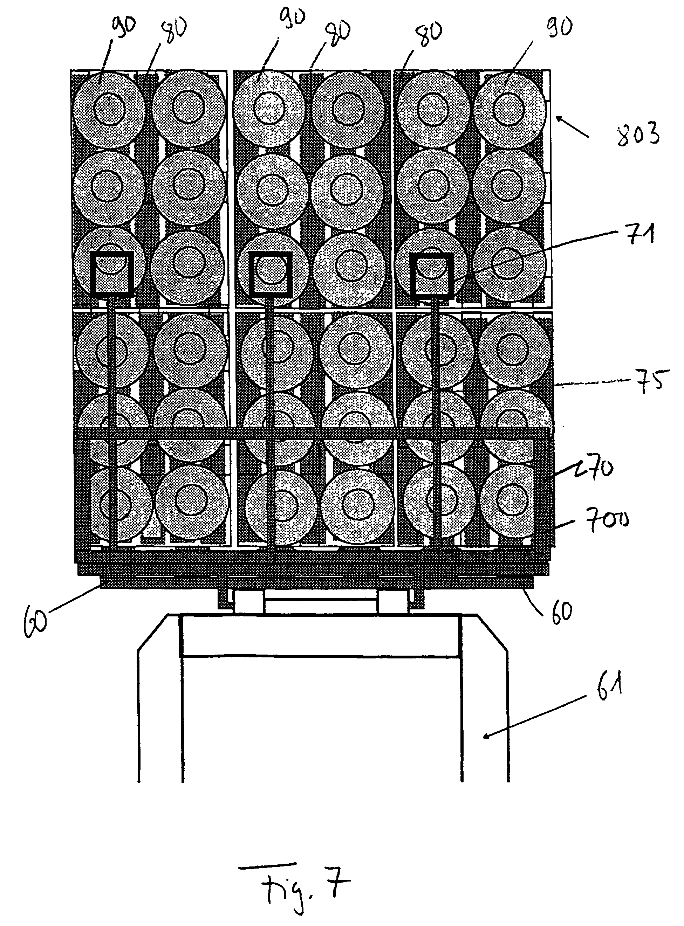

In Fig.7 ist der Gabelstapler 6 gemäß Fig. 5 von oben gezeigt, allerdings mit aufgeladenen realen Paletten 80, von denen die oberste Palettenebene 803 zu sehen ist, die aus sechs realen Paletten 80 mit je sechs Kegs 90 besteht. Die drei Meßköpfe 71 sind jeweils über Meßhalter 75 mit der Halterung 700 verbunden. Die Meßhalter 75 sind in ihrer Länge variierbar, so daß jeder Meßkopf 71 jeweils zwei reale Paletten 80 bearbeiten kann. Bezüglich der hier nicht erläuterten Bezugsziffern wird auf die entsprechende Erläuterung in Fig. 5 verwiesen (gleiche Bauteile sind mit gleichen Bezugsziffern bezeichnet).

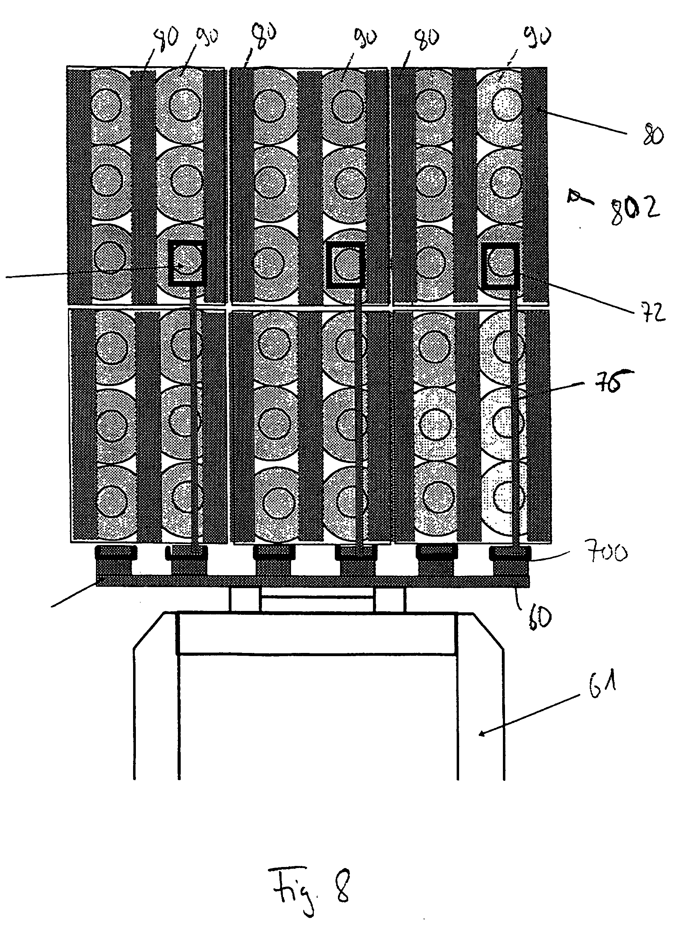

In Fig. 8 ist beispielhaft die mittlere Palettenebene 802 mit den zugehörigen realen Paletten 80 und den darunterliegenden Kegs 90 der untersten Palettenebene gezeigt. Die Meßköpfe 72 sind über Meßhalter 76 mit der Halterung 700 des Geräts 70 verbunden. Die Meßhalter sind in ihrer Länge ebenfalls variierbar, so daß auch hier jeder Meßkopf 72 zwei reale Paletten 80 bearbeiten kann. Ein Vergleich der Figuren 5, 7 und 8 zeigt, daß die Meßköpfe der obersten und mittleren Ebene seitlich versetzt angeordnet sind. Fig. 5 zeigt ferner, daß die Meßköpfe der obersten Ebene und der untersten Ebene übereinander angeordnet sind. Bezüglich der hier nicht erläuterten Bezugszeichen wird, wie zuvor in Fig. 7, auf die entsprechenden Erläuterungen in Fig. 5 verwiesen.

In Fig. 9 ist eine Abwandlung des Geräts gemäß Fig. 5, 7 und 8 von der Seite gezeigt (nur die Klammer 60, die Halterung 700 des Geräts 70, die Meßhalter 75, 76, die Meßköpfe 71, 72, die Paletten 80 und die Kegs 90), bei der lediglich zwei Palettenebenen 802, 803 und dementsprechend zwei Meßkopfebenen vorgesehen sind. Deutlich ist in dieser Figur die Verankerung der Meßhalter 75 und 76 in der Halterung 700 des Geräts 70 zu erkennen.

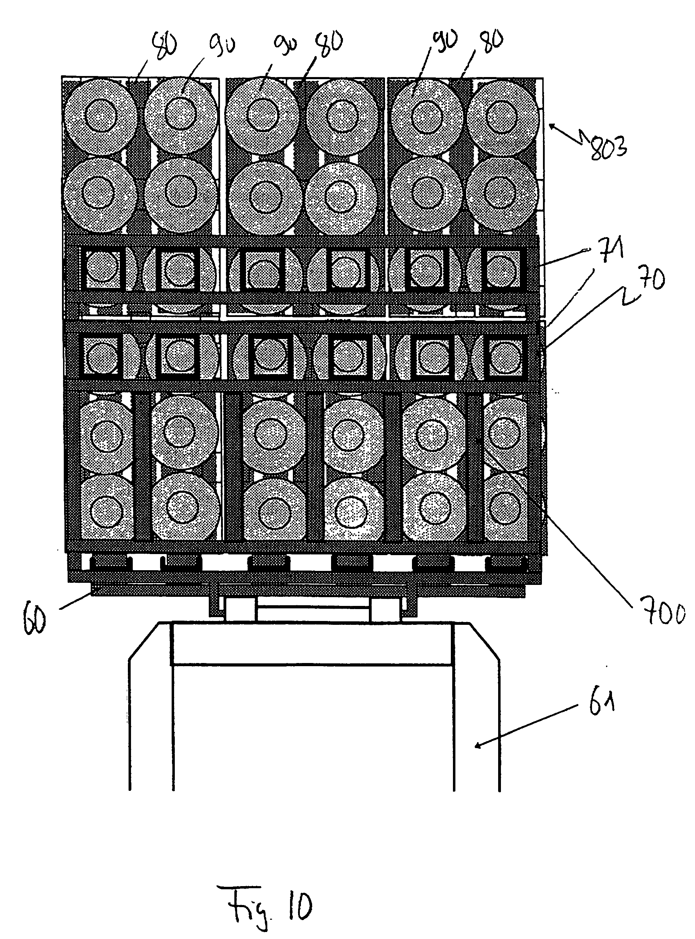

Das zweite Ausführungsbeispiel des erfindungsgemäßen Geräts in Fig. 6, 10 und 11 ist ähnlich aufgebaut wie das bereits geschilderte Ausführungsbeispiel gemäß Fig. 5, 7 und 8. Der wesentliche Unterschied besteht, wie Fig. 10 zeigt, darin, daß die Meßköpfe 71 der obersten Ebene stationär angeordnet sind, so daß pro reale Palette 80 jeweils ein Meßkopf 71 vorgesehen ist, der aus Gründen der Redundanz jeweils durch einen zweiten Meßkopf 71 pro realer Palette 80 ergänzt wird.

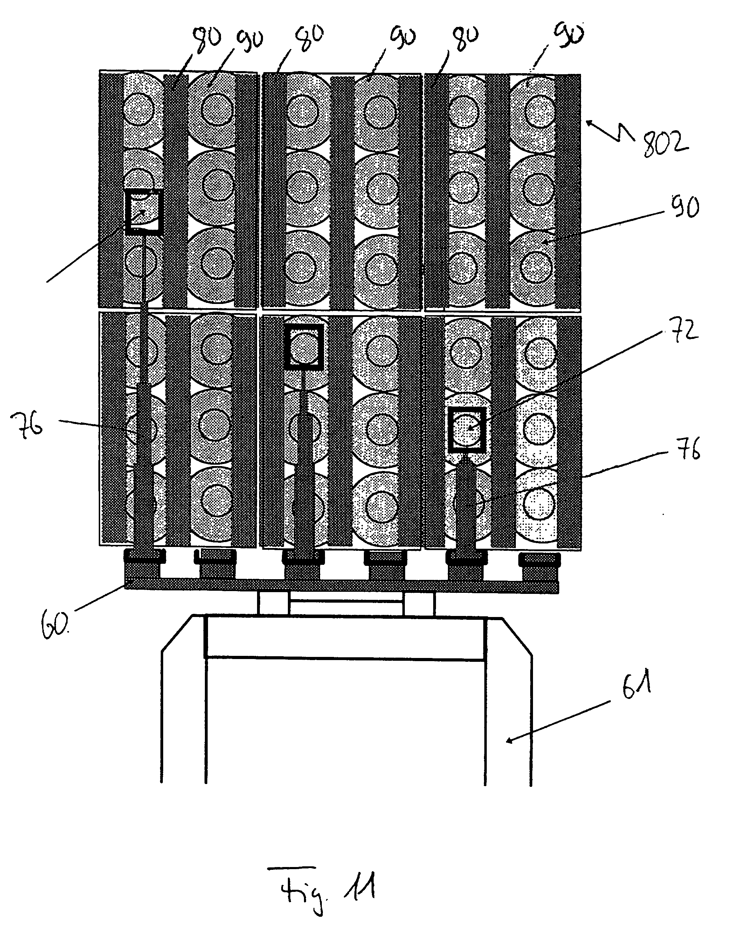

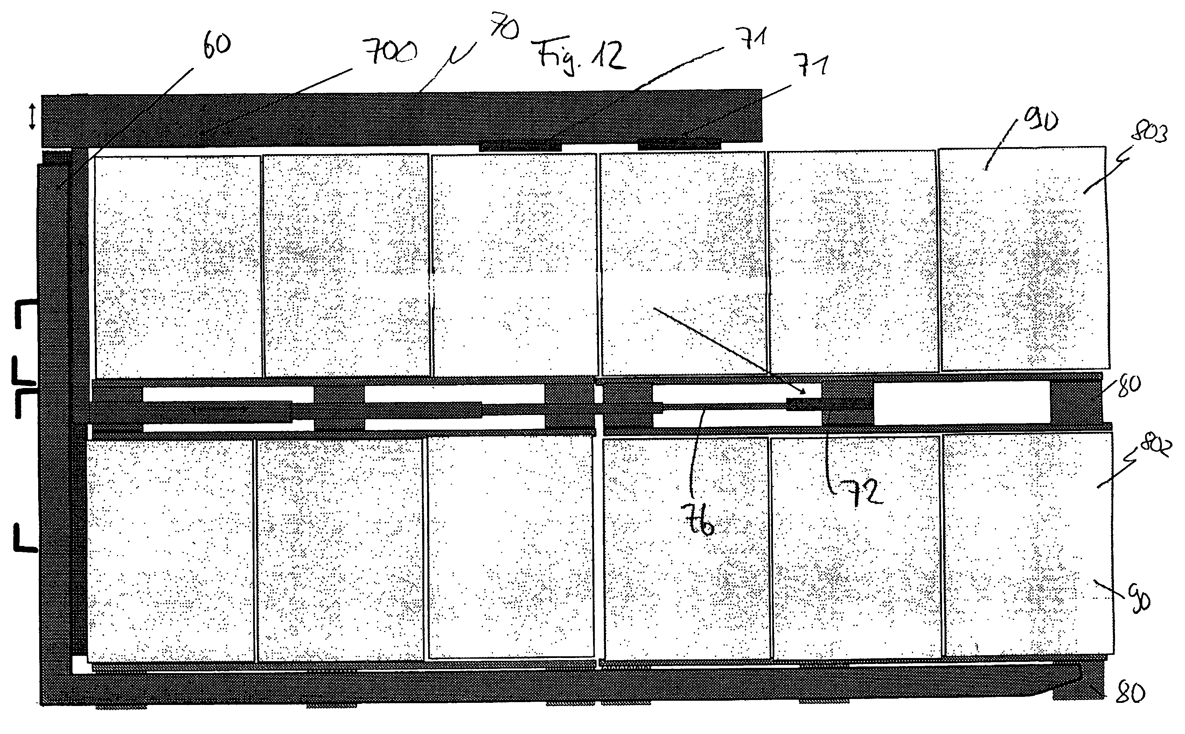

Die Halterung 700 ist, wie Fig. 10 zeigt, in diesem Ausführungsbeispiel in einer anderen Form ausgeführt, beinhaltet aber im wesentlichen dieselben Funktionalitäten. Bezüglich der nicht erläuterten Bezugszeichen wird auf die entsprechenden Erläuterungen der Figur 5, 6, 7, 8 und 9 verwiesen (gleiche Baugruppen sind mit gleichen Bezugszeichen gekennzeichnet). In Fig. 11 ist deutlich zu sehen, daß die in ihrer Länge variierbaren Meßhalter 76 in Form von Teleskoparmen ausgebildet sind. Die Abwandlung in Fig. 12 des Geräts 70 gemäß Fig. 6, 10 und 11 ist, ähnlich wie die Abwandlung gemäß Fig. 9, für die Beladung der Klammer 60 des Gabelstaplers 6 mit zwei (anstelle von drei) Palettenebenen 802, 803 vorgesehen. Bezüglich der nicht erläuterten Bezugszeichen sei auch hier auf die vorangegangenen Erläuterungen in Fig. 5 bis 11 verwiesen (gleiche Baugruppen sind mit gleichen Bezugszeichen gekennzeichnet).

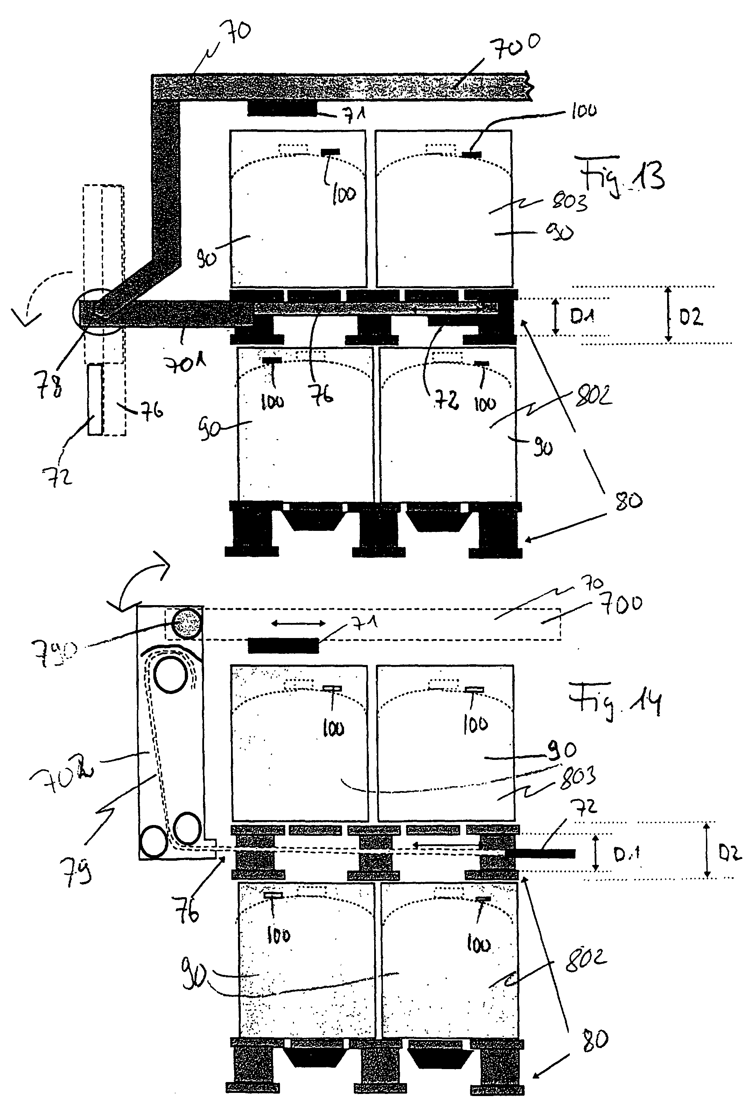

Zwei weitere Ausführungsbeispiele des erfindungsgemäßen Lese- oder Schreib- oder Lese-/Schreibgeräts 70 sind in den Fig. 13 und 14 gezeigt. Die dort gezeigten Geräte sind für Beladungen der Gabelstapler-Klammer mit zwei übereinander angeordneten realen Paletten 80 mit je zwei nebeneinander stehenden Kegreihen ausgelegt. Das Gerät 70 in Fig. 13 weist eine Halterung 700 auf, die seitlich heruntergeführt ist und dort eine horizontal ausgerichtete erste Drehachse 78 aufweist, um die ein Fortsetzungsteil 701 der Halterung 700 mit dem in seiner Länge variierbaren Meßhalter 76 für den Meßkopf 72 drehbar gelagert ist. Im Bedarfsfall, d. h. bei mehreren hintereinander angeordneten realen Paletten, können entlang der ersten Drehachse 78 weitere Meßhalter und weitere Meßköpfe an dem Fortsetzungsteil 701 befestigt sein, die parallel zu dem gezeigten Meßhalter 76/Meßkopf 72 ausgerichtet sind. Wie die gestrichelte Zeichnung und der gestrichelte Pfeil andeuten, ist das Fortsetzungsteil 701 in der Ruheposition so gedreht, daß die ebenfalls in Ruheposition (= minimale Länge) befindlichen Meßhalter 76 und Meßköpfe 72 senkrecht nach unten weisen. Zur Erfassung der Kegs 90 wird das Fortsetzungsteil 701 zunächst im Gegenuhrzeigersinn um etwa 90° gedreht, anschließend werden die Meßhalter 76 in den Zwischenraum der oberen realen Palette 80 eingefahren, bis der Meßkopf 72 die gewünschte Meßposition erreicht hat und die Daten aus dem Transponder 100 des sich unter dem Meßkopf 72 befindlichen Kegs 90 auslesen kann. Die übereinanderstehenden Kegs 90 weisen dabei einen Abstand D2 auf, der durch die Dicke der dazwischenliegenden realen Palette 80 vorgegeben wird. Der Freiraum, in dem sich der Meßhalter 76 mit dem Meßkopf 72 bewegen kann, ohne an die reale Palette 80 zu stoßen, weist eine Höhe D1 auf, die durch die Dicke der Abstandsbalken der realen Palette 80 vorgegeben ist.

Durch Feinjustierung des Drehwinkels, um den das Fortsetzungsteil 701 während des Betriebs aus der Ruheposition in die Betriebsposition herausgedreht wird, kann die relative Höhenpositionierung des Meßkopfes 72 in dem freien Zwischenraum der realen Palette 80 in den Grenzen von D1 variiert werden. Die Kegs 90 der oberen realen Palette 80 werden bei dieser Ausführungsform mittels eines stationär an der Halterung 700 angebrachten Meßkopfs 71 erfaßt, der in Wirkverbindung mit dem direkt unter ihm befindlichen Transponder 100 tritt. Auch hier können im Bedarfsfall, d. h. bei mehreren hintereinander angeordneten realen Paletten, weitere stationär an der Halterung 700 angebrachte Meßköpfe 71 vorgesehen sein.

Die Ausführungsform gemäß Fig. 14 zeigt anstelle der seitlich herunter geführten Halterung mit einem drehbaren Fortsetzungsteil 701 gemäß Fig. 13 ein um eine zweite horizontal ausgerichtete Drehachse 790 drehbar gelagertes seitliches Fortsetzungsteil 702 der Halterung 700, das eine Stromschleppketten-Vorrichtung 79 enthält, mit deren Hilfe der Meßkopf 72 in den freien Zwischenraum der oberen realen Palette 80 eingefahren wird, nachdem das seitliche Fortsetzungsteil 702 aus einer nicht senkrechten Ruheposition durch Drehen um die zweite Drehachse 790 im Uhrzeigersinn in eine senkrechte Lage gebracht worden ist (vgl. den angedeuteten Doppelpfeil in der Fig. 14). In ausgefahrener Position tritt anschließend der Meßkopf 72 mit dem oder den Transpondern 100 der sich unter ihm befindlichen Kegs 90 in Wirkverbindung, um die in den Transpondern gespeicherten Daten auszulesen. Bei dieser Ausführungsform ist ferner die Halterung 700 mit dem stationär an ihr befestigten oberen Meßkopf 71 oder, alternativ hierzu, nur der Meßkopf 71 in der Waagrechten verschiebbar, so daß der Meßkopf 71 ggf. auch mit dem Transponder 100 des anderen Kegs auf der oberen realen Palette 80 in Wirkverbindung treten kann. Bezüglich der nicht erläuterten Bezugszeichen der Fig. 13 und 14 sei auf die entsprechenden vorangegangenen Erläuterungen zu den Figuren 5 bis 12 verwiesen (gleiche Bauteile sind durch gleiche Bezugszeichen gekennzeichnet).

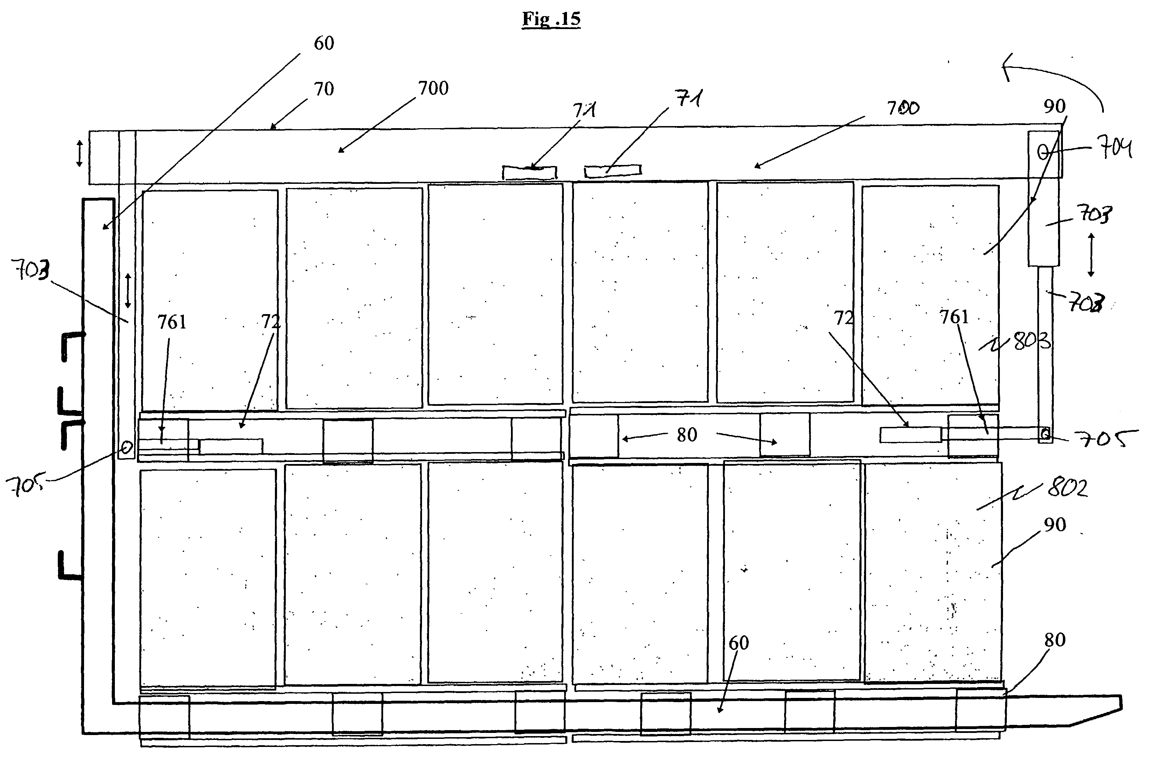

Die Ausführungsform gemäß Fig. 15 zeigt eine andere Ausführungsform des erfindungsgemäßen Lese- oder Schreib- oder Lese-/Schreibgeräts, bei dem anstelle des langen starr oder ausziehbar gestalteten Meßhalters nur starre "Meßhalterstummel" 761, die kürzer sind als die Meßhalter der anderen zuvor geschilderten Ausführungsbeispiele. Je nach Anordnung der Meßhalterstummel 761 in ihrer jeweiligen Halterung 700, 703 sind sie in der Lage, entweder von vorn und/oder seitlich und/oder von hinten mit den entsprechenden äußeren Behälter- bzw. Kegreihen oder mit einzelnen Behältern bzw. Kegs dieser äußeren Reihen in Wirkverbindung zu treten.

Alternativ zu der hier gezeigten Ausführungsform gemäß Fig. 15 ist es auch möglich, für unterschiedliche Behälter- oder/und Palettentypen die hierfür benötigten Meßstummel 761 auf einer gemeinsamen Halterung anzubringen. Die jeweils nicht benötigten Meßstummel werden bei dieser (nicht gezeigten) Anordnung während des Betriebs zweckmäßigerweise in eine Ruheposition gebracht, in der sie mit dem aufgenommenen Lastgut nicht kollidieren können.

Als Halterung für die Meßstummel 761 eignen sich je nach entsprechender Anpassung z. B. auch jene Halterungen 700, 701 bzw. 700, 702, wie sie in den Fig. 13 und 14 dargestellt sind. Im gezeigten Ausführungsbeispiel ist das Fortsetzungsteil der Halterung 700 mit der Ziffer 703 bezeichnet, das um eine dritte horizontal ausgerichtete Drehachse 704 an der Halterung 700 drehbar gelagert ist. Der oder die Meßstummel 761 sind ihrerseits um eine vierte horizontal ausgerichtete Drehachse 705 an dem Fortsetzungsteil 703 drehbar gelagert. Die beiden Drehachsen 704 und 705 sind parallel zueinander ausgerichtet.

Die Erfindung ist nicht auf die dargestellten Ausführungsbeispieleund Anwendungsgebiete beschränkt, sondern vielmehr auf weitere Ausführungsbeispiele und Anwendungsgebiete übertragbar.
So ist es z. B. möglich, anstelle der Meßköpfe in Form fester Antennen Meßköpfe in Form entfaltbarer Antennen vorzusehen, die, ähnlich wie beim Mechanismus von Hirschmannklemmen, reversibel entfaltet und wieder zusammengefaltet werden können.

In Fällen, in denen die Objekte mit seitlich an den Objektwandungen angebrachten Datenspeichern versehen sind, kann es zweckmäßig sein, die einzelnen Meßhalter von oben und/oder von unten in die Zwischenräume zwischen den einzelnen Objekten einzufahren, um die gewünschten Wirkverbindungen der zugehörigen Meßköpfe mit den Datenspeichern der Objekte herstellen zu können.

Ferner ist es möglich, Meßköpfe auch an den horizontalen Teilen der Klammern anzubringen.

Außerdem sind auch andere Anwendungsbereiche wie z. B. die allgemeine Hochregallagerhaltung für die unterschiedlichsten Gebrauchsgüter denkbar.

Schließlich ist es möglich, während der Zeiten, in denen der Gabelstapler (oder ein anderes geeignetes Transportgerät) keine Last befördert oder außer Betrieb ist, die Meßhalter bzw. Meßhalterstummel mittels einer zusätzlichen Antriebsmechanik in eine gemeinsame Ruheposition z. B. am oberen Ende der Klammer-Halterung des Gabelstaplers oder in den ggf. vorhandenen Lasthalter des Gabelstaplers zu fahren, um das Kollisions- bzw. Verletzungsrisiko zu verringern. Ferner ist es möglich, je nach Art und Form des zu transportierenden Lastguts, nur die benötigten Meßhalter aus dieser Ruheposition in die jeweilige benötigte Betriebsposition zu fahren, während die nicht benötigten Meßhalter in der gemeinsamen Ruheposition verbleiben.

## Patentansprüche

1. Logistiksystem für den Versand und/oder den Empfang von Transportgut, wobei das Transportgut aus einem oder mehreren auf realen Paletten (80) gelagerten Objekten (90) besteht, wobei jedes Objekt (90) einen lokalen Datenspeicher (100) aufweist, in dem das zugehörige Objekt (90) kennzeichnende Daten abgespeichert sind, und wobei
- das Transportgut mit Hilfe eines Transportgeräts (6) von einem ersten Ort zu einem zweiten Ort transportiert wird,
- während des Transports mindestens ein Lesegerät (70) mit dem Datenspeicher von mindestens einem Objekt (90) einer jeden realen Palette (80) zumindest zeitweilig in Wirkverbindung tritt und während dieser Zeit dort gespeicherte Daten ausliest,
- ein zentraler Datenspeicher für die Speicherung und Abrufung von Objekte kennzeichnenden Daten vorgesehen ist, welcher mit dem Lesegerät in Verbindung steht,
**dadurch gekennzeichnet, dass**
- in dem zentralen Datenspeicher für die Gesamtheit aller realen Paletten (80) die die einzelnen Objekte (90) kennzeichnenden Daten palettenweise als virtuelle oder logische Paletten zusammengefasst und abgespeichert sind,
- durch Vergleich der ausgelesenen Daten wenigstens eines Objektes pro realer Palette mit den im zentralen Datenspeicher abgespeicherten Daten die einzelnen virtuellen oder logischen Paletten und/oder die Objekte (90) des Transportguts identifiziert und in einem weiteren Verfahrensschritt alle einzelnen Objekte (90) des Transportguts im Falle des Versands dem Empfänger des Transportguts und im Falle des Empfangs dem Versender des Transportguts zugeordnet werden.

2. Logistiksystem nach Anspruch 1, **dadurch gekennzeichnet, daß** mindestens ein Schreibgerät vorgesehen ist, das mit dem Datenspeicher von einem oder mehreren oder allen Objekten (90) einer jeden realen Palette zumindest zeitweilig in Wirkverbindung tritt und während dieser Zeit jeweils das zugehörige Objekt (90) kennzeichnende Daten in den Datenspeicher schreibt.

3. Logistiksystem nach Anspruch 2, **dadurch gekennzeichnet, daß** das Lesegerät (70) und das Schreibgerät zu einem Lese-/Schreibgerät zusammengefaßt sind.

4. Logistiksystem nach einem der Ansprüche 1 bis 3, **dadurch gekennzeichnet, daß** das Lesegerät (70) und/oder das Schreibgerät und/oder das Lese/Schreibgerät stationär am Transportweg des Transportguts oder mobil am Transportgerät (6) selbst angeordnet ist (sind).

5. Gerät zum Auslesen von Daten aus einem oder mehreren Datenspeichern und/oder zum Einschreiben von Daten in einen oder mehrere Datenspeicher ("Lese- oder Schreib- oder Lese-/Schreibgerät"), **dadurch gekennzeichnet, daß** das Gerät über einen Meßausleger mit einem Leseoder Schreib- oder Lese-/Schreibkopf verbunden ist und daß der Meßausleger in seiner Länge zwischen einer minimalen und maximalen Länge beliebig oder in vorgegebenen Zwischenwerten einstellbar ist.

6. Gerät nach Anspruch 5, **dadurch gekennzeichnet, daß** der Meßausleger horizontal ausgerichtet ist.

7. Gerät zum Auslesen von Daten aus einem oder mehreren Datenspeichern und/oder zum Einschreiben von Daten in einen oder mehrere Datenspeicher ("Lese- oder Schreib- oder Lese-/Schreibgerät"), **dadurch gekennzeichnet,**
- **daß** das Gerät (70) mehrere Lese- oder Schreib- oder Lese-/Schreibköpfe (71, 72, 73) aufweist,
- **daß** die einzelnen Lese- oder Schreib- oder Lese-/Schreibköpfe (71, 72, 73) jeweils über einen Meßausleger (75, 76) mit dem Gerät (70) verbunden sind,
- **daß** die einzelnen Meßausleger (75, 76) in einer oder in mehreren zueinander parallelen ersten Ebenen (802, 803) angeordnet sind und daß zumindest ein Teil der Meßausleger (76) jeweils in ihrer Länge zwischen einer minimalen und maximalen Länge beliebig oder in vorgegebenen Zwischenwerten einstellbar ist.

8. Gerät nach Anspruch 7, **dadurch gekennzeichnet, daß** die Meßausleger (75, 76) in einer oder mehreren zueinander parallelen horizontalen ersten Ebenen (802, 803) angeordnet sind.

9. Gerät nach einem der Ansprüche 5 bis 8, **dadurch gekennzeichnet, daß** der Meßausleger oder ein Teil der Meßausleger oder alle Meßausleger in einer zweiten Ebene senkrecht zur Achse der Ausrichtung des oder der Meßausleger (75, 76) verschiebbar angeordnet sind.

10. Gerät nach Anspruch 9, **dadurch gekennzeichnet, daß** der oder die Meßausleger (75, 76) in der zweiten Ebene entlang einer ersten Verschiebungsachse und/oder entlang einer zur ersten Verschiebungsachse zweiten Verschiebungsachse verschiebbar angeordnet sind.

11. Gerät nach Anspruch 10, **dadurch gekennzeichnet, daß** die erste Verschiebungsachse bei horizontaler Ausrichtung der ersten Ebenen (802, 803) im Raum vertikal im Raum ausgerichtet ist und die zweite Verschiebungsachse bei horizontaler Ausrichtung der ersten Ebenen (802, 803) im Raum horizontal im Raum ausgerichtet ist.

12. Gerät nach einem der Ansprüche 5 bis 11, **dadurch gekennzeichnet, daß** der oder die Meßausleger (75, 76) als Teleskoparme ausgebildet sind.

13. Gerät nach Anspruch 12, **dadurch gekennzeichnet, daß** zum Aus- und Einfahren des oder der Teleskoparme (jeweils) ein Spindelantrieb oder ein pneumatischer oder hydraulischer Antrieb oder ein Antrieb mit Seil- oder Kettenzug oder ein Stromschleppkettenantrieb vorgesehen ist.

14. Gerät nach einem der Ansprüche 5 bis 13, **dadurch gekennzeichnet, daß** der oder die lokalen Datenspeicher (100) an den Objekten (90) (jeweils) als Transponder ausgebildet ist (sind), der (die) auf induktivem Wege oder über eine Hochfrequenz-Funkverbindung mit den in Form von Antennen ausgebildeten Lese- oder Schreib- oder Lese-/Schreibköpfen (71, 72, 73) in Wirkverbindung tritt (treten).

15. Gerät nach einem der Ansprüche 5 bis 13, **dadurch gekennzeichnet, daß** der oder die lokalen Datenspeicher (jeweils) als Barcode-Streifen oder als Streifen mit einer Folge von Buchstaben und/oder Zahlen ausgebildet ist (sind) und daß die oder die Leseköpfe als Barcode-Leser oder Mustererkenner oder als Videokamera(s) ausgebildet ist (sind).

16. Gerät nach einem der Ansprüche 5 bis 15, **dadurch gekennzeichnet, daß** der oder die Meßhalter (76) (jeweils) an einem Fortsetzungsteil (701) einer Halterung (700) befestigt ist (sind), das um eine horizontal ausgerichtete erste Drehachse (78) vorzugsweise um etwa 90° drehbar gelagert ist (sind), und/oder daß ein die Meßhalter (76) haltendes Fortsetzungsteil (702) der Halterung (700) um eine horizontal ausgerichtete zweite Drehachse (790) an der Halterung (700) drehbar gelagert ist.

17. Gerät nach einem der Ansprüche 5 bis 16, **dadurch gekennzeichnet, daß** die Meßhalter (75, 76) in zwei oder drei übereinander angeordneten horizontalen Ebenen (802, 803) angeordnet sind und daß die Meßhalter (75) der obersten Ebene (803) in ihrer Länge nicht variierbar sind.

18. Gerät nach einem der Ansprüche 5 bis 17, **dadurch gekennzeichnet, daß** das Gerät an der Klammer (60) eines Gabelstaplers (6) oder an der Befestigungsvorrichtung (62) für die Klammer (60) eines Gabelstaplers (6) befestigt ist.

19. Gerät nach Anspruch 18, **dadurch gekennzeichnet, daß** ein oder mehrere Meßhalter (75) und Lese- oder Schreib- oder Lese-/Schreibköpfe (71) in einem zur Klammer (60) gehörenden Lasthalter integriert ist (sind).

20. Gerät nach einem der Ansprüche 18 oder 19, **dadurch gekennzeichnet, daß** Meßhalter (75, 76) und Lese- oder Schreib- oder Lese-/Schreibköpfe (71, 72, 73) in zwei oder drei übereinander liegenden horizontalen Ebenen (802, 803) angeordnet sind, wobei der oder die Meßhalter (75) der oberen (obersten) Ebene (803) nicht in ihrer Länge variierbar sind und der oder die Meßhalter (76) der unteren Ebene (der beiden unteren Ebenen) (802) in ihrer Länge variierbar sind oder die Meßhalter (75, 76) aller Ebenen (802, 803) in ihrer Länge variierbar sind.

21. Gerät nach Anspruch 20, **dadurch gekennzeichnet, daß** in der unteren Ebene (den beiden unteren Ebenen) (802) (jeweils) drei Lese- oder Schreib- oder Lese-/Schreibköpfe (72, 73) vorgesehen sind und daß in der oberen (der obersten) Ebene (803) drei, sechs oder zwölf Lese- oder Schreib- oder Lese-/Schreibköpfe (71) vorgesehen sind.

22. Gerät nach einem der Ansprüche 5 bis 21, **dadurch gekennzeichnet, daß** der oder die Meßhalter (75, 76) mittels eines zusätzlichen Antriebs in eine (gemeinsame) Ruheposition bringbar sind.

23. Gerät nach Anspruch 22, **dadurch gekennzeichnet, daß** bei Gabelstaplern sich die (gemeinsame) Ruheposition des oder der Meßhalter am oberen Ende der Klammer (60) oder der Befestigungsvorrichtung (62) für die Klammer (60) oder in oder an einem ggf. vorhandenen Lasthalter befindet.

24. Gerät nach Anspruch 23, **dadurch gekennzeichnet, daß** die einzelnen Meßhalter oder Meßhaltergruppen je nach Art und Abmessung des zu erfassenden Transportguts individuell oder in Gruppen aus der (gemeinsamen) Ruheposition in die jeweils benötigte Betriebsposition fahrbar sind.

25. Gerät nach einem der Ansprüche 5 bis 24, **dadurch gekennzeichnet, daß** die Meßhalter so angeordnet und ggf. in ihrer Länge variierbar sind, daß lediglich die auf den realen Paletten (80) des Transportguts sich außen befindlichen Objekte (90) zum Aufbau von Wirkverbindungen für sie erreichbar sind.

26. Gerät nach Anspruch 25, **dadurch gekennzeichnet, daß** die Meßhalter als Meßhalterstummel (761) konstanter Länge ausgebildet sind.

27. Gerät nach Anspruch 26, **dadurch gekennzeichnet, daß** die einzelnen Meßhalterstummel (761) an einen oder mehreren Fortsetzungsteilen (703) der Halterung (700) angebracht sind und daß ein Teil der Fortsetzungsteile (703) oder alle Fortsetzungsteile (703) um horizontal ausgerichtete dritte Drehachsen (704) drehbar an der Halterung (700) gelagert sind.

28. Gerät nach Anspruch 27, **dadurch gekennzeichnet, daß** die Meßhalterstummel (761) jeweils um eine weitere parallel zur dritten Drehachse (704) ausgerichtete vierte Drehachse (705) drehbar gelagert sind.

29. Verfahren nach einem der Ansprüche 1 bis 4 und/oder Gerät nach einem der Ansprüche 5 bis 28, **gekennzeichnet durch** die Anwendung beim Transport von auf Paletten nebeneinander und/oder übereinander angeordneten Getränkebehältern, insbesondere von Kegs oder von Getränkekisten oder von Fässern.

## Claims

1. Logistical system for the dispatch and/or the receipt of transported goods, the transported goods comprising one or more objects (90) supported on real pallets (80), each object (90) having a local data storage means (100), in which data identifying the associated object (90) are stored, and
- the transported goods being transported from a first location to a second location with the aid of a transport appliance (6),
- during the transport, at least one reading device (70) being operatively connected to the data storage means of at least one object (90) of each real pallet (80), at least for some time, and during this time, reading data stored there,
- a central data storage means, which is connected to the reader, being provided for the storage and calling of data identifying objects,
**characterized in that**
- in the central data storage means, for all of the real pallets (80), the data identifying the individual objects (90) are combined and stored pallet by pallet as virtual or logical pallets,
- by comparing the data read out from at least one object for each real palette with data stored in the central data storage means, the individual virtual or logical pallets and/or the objects (90) of the transported goods are identified and, in a further method step, all the individual objects (90) of the transported goods are assigned to the recipient of the transported goods in the case of dispatch and to the sender of the transported goods in the case of receipt.

2. Logistical system according to Claim 1, **characterized in that** at least one writing device is provided, which is operatively connected to the data storage means by one or more or all the objects (90) of each real pallet, at least for some time, and, during this time, in each case writing the data identifying the associated object (90) into the data storage means.

3. Logistical system according to Claim 2, **characterized in that** the reading device (70) and the writing device are combined to form a reading/writing device.

4. Logistical system according to one of Claims 1 to 3, **characterized in that** the reading device (70) and/or the writing device and/or the reading/writing device is (are) arranged in a stationary manner on the transport path of the transported goods or in a mobile manner on the transport appliance (6) itself.

5. Device for reading data out from one or more data storage means and/or for writing data into one or more data storage means ("reading or writing or reading/writing device"), **characterized in that** the device is connected to a reading or writing or reading/writing head via a measuring boom, and **in that** the length of the measuring boom can be set between a minimum and maximum length as desired or in predefined intermediate values.

6. Device according to Claim 5, **characterized in that** the measuring boom is aligned horizontally.

7. Device for reading data out from one or more data storage means and/or for writing data into one or more data storage means ("reading or writing or reading/writing device"), **characterized**
- **in that** the device (70) has a plurality of reading or writing or reading/writing heads (71, 72, 73),
- **in that** the individual reading or writing or reading/writing heads (71, 72, 73) are in each case connected to the device (70) via a measuring boom (75, 76),
- **in that** the individual measuring booms (75, 76) are arranged in one or more mutually parallel first planes (802, 803), and in that the length of at least some of the measuring booms (76) can be set between a minimum and maximum length as desired or in predefined intermediate values.

8. Device according to Claim 7, **characterized in that** the measuring booms (75, 76) are arranged in one or more mutually parallel horizontal first planes (802, 803).

9. Device according to one of Claims 5 to 8, **characterized in that** the measuring booms or some of the measuring booms or all of the measuring booms are arranged in a second plane such that they can be displaced at right angles to the axis of the alignment of the measuring boom or booms (75, 76).

10. Device according to Claim 9, **characterized in that** the measuring boom or booms (75, 76) are arranged in the second plane such that they can be displaced along a first displacement axis and/or along a second displacement axis in relation to the first displacement axis.

11. Device according to Claim 10, **characterized in that**, if the first planes (802, 803) are aligned horizontally in space, the first displacement axis is aligned vertically in space and, if the first planes (802, 803) are aligned horizontally in space, the second displacement axis is aligned horizontally in space.

12. Device according to one of Claims 5 to 11, **characterized in that** the measuring boom or booms (75, 76) are constructed as telescopic arms.

13. Device according to Claim 12, **characterized in that**, in order to extend and retract the telescopic arm or arms, (in each case) a spindle drive or a pneumatic or hydraulic drive or a drive with a cable or chain run or a power drag chain drive is provided.

14. Device according to one of Claims 5 to 13, **characterized in that** the local data storage means (100) on the objects (90) (in each case) is (are) formed as transponder(s) which is (are) connected in an inductive manner or via a high frequency radio connection to the reading or writing or reading/writing heads (71, 72, 73) constructed in the form of antennas.

15. Device according to one of Claims 5 to 13, **characterized in that** the local data storage means (in each case) is (are) formed as bar-code strips or as strips with a sequence of letters and/or numbers, and **in that** the reading head or heads is (are) formed as (a) bar-code reader(s) or (a) pattern recognizer(s) or as (a) video camera(s).

16. Device according to one of Claims 5 to 15, **characterized in that** the measuring holder or holders (76) is (are) (in each case) fixed to a extension part (701) of a holder (700), which is (are) mounted such that it (they) can be rotated about a horizontally aligned first axis of rotation (78), preferably through approximately 90º, and/or **in that** an extension part (702) of the holder (700) which holds the measuring holder (76) is mounted such that it can be rotated on the holder (700) about a horizontally aligned second axis of rotation (790).

17. Device according to one of Claims 5 to 16, **characterized in that** the measuring holders (75, 76) are arranged in two or three horizontal planes (802, 803) arranged above one another, and **in that** the length of the measuring holders (75) of the uppermost planes (803) cannot be varied.

18. Device according to one of Claims 5 to 17, **characterized in that** the device is fixed to the clamps (60) of a fork-lift truck (6) or to the fixing device (62) for the clamps (60) of a fork-lift truck (6).

19. Device according to Claim 18, **characterized in that** one or more measuring holders (75) and reading or writing or reading/writing heads (71) is (are) integrated in a load holder belonging to the clamp (60).

20. Device according to one of Claims 18 or 19, **characterized in that** measuring holders (75, 76) and reading or writing or reading/writing heads (71, 72, 73) are arranged in two or three horizontal planes (802, 803) lying above one another, it not being possible for the length of the measuring holder or holders (75) of the upper (topmost) plane (803) to be varied, and it being possible for the length of the measuring holder or holders (76) of the lower plane (of the two lower planes) (802) to be varied, or it being possible for the length of the measuring holders (75, 76) of all the planes (802, 803) to be varied.

21. Device according to Claim 20, **characterized in that**, in the lower plane (the two lower planes) (802), (in each case) three reading or writing or reading/writing heads (72, 73) are provided, and **in that**, in the upper (the topmost) plane (803), three, six or twelve reading or writing or reading/writing heads (71) are provided.

22. Device according to one of Claims 5 to 21, **characterized in that** the measuring holder or holders (75, 76) can be moved into a (common) rest position by means of an additional drive.

23. Device according to Claim 22, **characterized in that**, in the case of fork-lift trucks, the (common) rest position of the measuring holder or holders is located at the upper end of the clamps (60) or the fixing device (62) for the clamps (60) or in or on a load holder which may be present.

24. Device according to Claim 23, **characterized in that** the individual measuring holders or measuring holder groups, depending on the type and dimension of the transported goods to be registered, can be moved individually or in groups from the (common) rest position into the respectively needed operating position.

25. Device according to one of Claims 5 to 24, **characterized in that** the measuring holders are arranged in such a way and, if appropriate, their length can be varied in such a way, that only the objects (90) located on the outside on the real pallets (80) of the transported goods can be reached in order to set up operative connections for them.

26. Device according to Claim 25, **characterized in that** the measuring holders are constructed as measuring holder stubs (761) of constant length.

27. Device according to Claim 26, **characterized in that** the individual measuring holder stubs (761) are fitted to one or more extension parts (703) of the holder (700), and **in that** some of the extension parts (703) or all of the extension parts (703) are mounted on the holder (700) such that they can be rotated about horizontally aligned third axes of rotation (704).

28. Device according to Claim 27, **characterized in that** the measuring holder stubs (761) are in each case mounted such that they can be rotated about a further, fourth axis of rotation (705) aligned parallel with the third axis of rotation (704).

29. Method according to one of Claims 1 to 4 and/or device according to one of Claims 5 to 28, **characterized by** the use in the case of beverage containers arranged beside one another and/or above one another on pallets during transport, in particular of kegs or beverage crates or barrels.

## Revendications

1. Système logistique pour la réception et/ou l'expédition de marchandises à transporter, avec lequel les marchandises à transporter se composent d'un ou de plusieurs objets (90) stockés sur des palettes réelles (80), avec lequel chaque objet (90) présente une mémoire de données (100) locale dans laquelle sont enregistrées les données qui **caractérisent** l'objet (90) associé, et avec lequel
- les marchandises à transporter sont transportées d'un premier endroit vers un deuxième endroit à l'aide d'un engin de transport (6),
- pendant le transport, au moins un dispositif de lecture (70) entre au moins temporairement en liaison active avec la mémoire de données d'au moins un objet (90) de chaque palette réelle (80) et, pendant ce temps, lit les données qui y sont enregistrées,
- il est prévu une mémoire de données centrale pour l'enregistrement et la lecture des données qui **caractérisent** les objets, laquelle est en liaison avec le dispositif de lecture,
**caractérisé en ce que**
- dans la mémoire de données centrale, pour l'ensemble de toutes les palettes réelles (80), les données qui **caractérisent** les objets (90) individuels sont regroupées et enregistrées par palette sous la forme de palettes virtuelles ou logiques,
- les palettes virtuelles ou logiques individuelles et/ou les objets (90) des marchandises à transporter sont identifiés en comparant les données lues d'au moins un objet par palette réelle avec les données enregistrées dans la mémoire de données centrale puis, au cours d'une autre étape du procédé, tous les objets (90) individuels des marchandises à transporter sont associés au destinataire des marchandises à transporter dans le cas de l'expédition et à l'expéditeur des marchandises à transporter dans le cas de la réception.

2. Système logistique selon la revendication 1, **caractérisé en ce qu'**il est prévu au moins un dispositif d'écriture qui entre au moins temporairement en liaison active avec la mémoire de données d'un ou de plusieurs objets ou de tous les objets (90) de chaque palette réelle et, pendant ce temps, écrit dans la mémoire de données les données qui **caractérisent** à chaque fois l'objet (90) correspondant.

3. Système logistique selon la revendication 2, **caractérisé en ce que** le dispositif de lecture (70) et le dispositif d'écriture sont regroupés en un dispositif de lecture/écriture.

4. Système logistique selon l'une des revendications 1 à 3, **caractérisé en ce que** le dispositif de lecture (70) et/ou le dispositif d'écriture et/ou le dispositif de lecture/écriture est (sont) installé(s) à demeure sur le trajet des marchandises à transporter ou de manière mobile sur l'engin de transport (6) lui-même.

5. Dispositif pour lire les données d'une ou de plusieurs mémoires de données et/ou pour écrire des données dans une ou plusieurs mémoires de données (« dispositif de lecture ou dispositif d'écriture ou dispositif de lecture/écriture »), **caractérisé en ce que** le dispositif est relié à une tête de lecture ou une tête d'écriture ou une tête de lecture/écriture par le biais d'un bras de mesure et que la longueur du bras de mesure peut être réglée à volonté ou à des valeurs intermédiaires données entre une longueur minimale et une longueur maximale.

6. Dispositif selon la revendication 5, **caractérisé en ce que** le bras de mesure est dirigé dans le sens horizontal.

7. Dispositif pour lire les données d'une ou de plusieurs mémoires de données et/ou pour écrire des données dans une ou plusieurs mémoires de données (« dispositif de lecture ou dispositif d'écriture ou dispositif de lecture/écriture »), **caractérisé en ce**
- **que** le dispositif (70) présente plusieurs têtes de lecture ou têtes d'écriture ou têtes de lecture/écriture (71, 72, 73),
- **que** les têtes de lecture ou têtes d'écriture ou têtes de lecture/écriture (71, 72, 73) individuelles sont à chaque fois reliées au dispositif (70) par le biais d'un bras de mesure (75, 76),
- **que** les bras de mesure (75, 76) individuels sont disposés dans un ou plusieurs premiers plans (802, 803) parallèles les uns aux autres et que la longueur d'au moins une partie du bras de mesure (76) peut être réglée à volonté ou à des valeurs intermédiaires données entre une longueur minimale et une longueur maximale.

8. Dispositif selon la revendication 7, **caractérisé en ce que** les bras de mesure (75, 76) sont disposés dans un ou plusieurs premiers plans (802, 803) horizontaux parallèles les uns aux autres.

9. Dispositif selon l'une des revendications 5 à 8, **caractérisé en ce que** le bras de mesure ou une partie du bras de mesure ou tous les bras de mesure sont disposés de manière à pouvoir se déplacer dans un deuxième plan perpendiculaire à l'axe d'alignement du ou des bras de mesure (75, 76).

10. Dispositif selon la revendication 9, **caractérisé en ce que** le ou les bras de mesure (75, 76) sont disposés de manière à pouvoir se déplacer dans le deuxième plan le long d'un premier axe de déplacement et/ou le long d'un deuxième axe de déplacement par rapport au premier axe de déplacement.

11. Dispositif selon la revendication 10, **caractérisé en ce que** le premier axe de déplacement, lorsque le premier plan (802, 803) est aligné dans le sens horizontal dans l'espace, est aligné dans le sens vertical dans l'espace et le deuxième axe de déplacement, lorsque le premier plan (802, 803) est aligné dans le sens horizontal dans l'espace, est aligné dans le sens horizontal dans l'espace.

12. Dispositif selon l'une des revendications 5 à 11, **caractérisé en ce que** le ou les bras de mesure (75, 76) sont réalisés sous la forme de bras télescopiques.

13. Dispositif selon la revendication 12, **caractérisé en ce qu'**un mécanisme d'entraînement à broche ou alors un mécanisme d'entraînement pneumatique ou hydraulique ou encore un mécanisme d'entraînement avec commande par câble ou par chaîne ou encore un mécanisme d'entraînement à chaîne électrique d'accompagnement est (à chaque fois) prévu pour la sortie ou la rentrée du ou des bras télescopiques.

14. Dispositif selon l'une des revendications 5 à 13, **caractérisé en ce que** la ou les mémoires de données (100) locales sur les objets (90) est (sont) (à chaque fois) réalisée(s) sous la forme d'émetteur(s)/récepteur(s) qui entre(nt) en liaison active de manière inductive ou par le biais d'une liaison radioélectrique à haute fréquence avec les têtes de lecture ou têtes d'écriture ou têtes de lecture/écriture (71, 72, 73) réalisées sous la forme d'antennes.

15. Dispositif selon l'une des revendications 5 à 13, **caractérisé en ce que** la ou les mémoires de données locales est (sont) (à chaque fois) réalisée(s) sous la forme de bandes à code à barres ou de bandes comportant une série de lettres et/ou de chiffres et que la ou les têtes de lecture est (sont) réalisée(s) sous la forme d'un lecteur de code à barres ou d'un dispositif de reconnaissance de modèle ou d'une ou de caméra(s) vidéo.

16. Dispositif selon l'une des revendications 5 à 15, **caractérisé en ce que** le ou les supports de mesure (76) est (sont) (à chaque fois) fixé(s) sur une partie en saillie (701) d'un support (700) qui est logée de manière à pouvoir pivoter, de préférence d'environ 90°, autour d'un premier axe de rotation (78) dirigé dans le sens horizontal et/ou qu'une partie en saillie (702) du support (700) qui maintient le support de mesure (76) est logée de manière à pouvoir pivoter autour d'un deuxième axe de rotation (790) dirigé dans le sens horizontal.

17. Dispositif selon l'une des revendications 5 à 16, **caractérisé en ce que** les supports de mesure (75, 76) sont disposés dans deux ou trois plans horizontaux (802, 803) superposés les uns aux autres et que la longueur du support de mesure (75) du plan le plus haut (803) n'est pas variable.

18. Dispositif selon l'une des revendications 5 à 17, **caractérisé en ce que** le dispositif est fixé au mécanisme de préhension (60) d'un chariot élévateur (6) ou au dispositif de fixation (62) du mécanisme de préhension (60) d'un chariot élévateur (6).

19. Dispositif selon la revendication 18, **caractérisé en ce qu'**un ou plusieurs supports de mesure (75) et têtes de lecture ou têtes d'écriture ou têtes de lecture/écriture (71) est (sont) intégrés dans un porte-charge faisant partie du mécanisme de préhension (60).

20. Dispositif selon l'une des revendications 18 ou 19, **caractérisé en ce que** les supports de mesure (75, 76) et les têtes de lecture ou têtes d'écriture ou têtes de lecture/écriture (71, 72, 73) sont disposés dans deux ou trois plans horizontaux (802, 803) superposés les uns aux autres, la longueur du ou des supports de mesure (75) du plan supérieur (le plus haut) (803) n'étant pas variable et la longueur du ou des supports de mesure (76) du plan le plus bas (des deux plans inférieurs) (802) étant variable ou alors la longueur des supports de mesure (75, 76) de tous les plans (802, 803) étant variable.

21. Dispositif selon la revendication 20, **caractérisé en ce que** trois têtes de lecture ou têtes d'écriture ou têtes de lecture/écriture (72, 73) sont (à chaque fois) prévues dans le plan le plus bas (les deux plans inférieurs) (802) et que trois, six ou douze têtes de lecture ou têtes d'écriture ou têtes de lecture/écriture (71) sont prévues dans le plan supérieur (le plus haut) (803).

22. Dispositif selon l'une des revendications 5 à 21, **caractérisé en ce que** le ou les supports de mesure (75, 76) peuvent être amenés en une position de repos (commune) à l'aide d'un mécanisme d'entraînement supplémentaire.

23. Dispositif selon la revendication 22, **caractérisé en ce que** sur les chariots élévateurs, la position de repos (commune) du ou des supports de mesure se trouve à l'extrémité supérieure du mécanisme de préhension (60) ou du dispositif de fixation (62) du mécanisme de préhension ou encore dans ou sur un porte-charge éventuellement présent.

24. Dispositif selon la revendication 23, **caractérisé en ce que** les supports de mesure individuels ou les groupes de supports de mesure peuvent être amenés individuellement ou en groupes de la position de repos (commune) à la position d'utilisation à chaque fois nécessaire en fonction de la nature et des dimensions des marchandises à transporter à saisir.

25. Dispositif selon l'une des revendications 5 à 24, **caractérisé en ce que** les supports de mesure sont disposés et éventuellement variables en longueur de manière à ce que seuls les objets (90) qui se trouvent à l'extérieur sur les palettes réelles (80) de marchandises à transporter peuvent être atteints par eux pour l'établissement de liaisons actives.

26. Dispositif selon la revendication 25, **caractérisé en ce que** les supports de mesure sont réalisés sous la forme de tronçons de support de mesure (761) de longueur constante.

27. Dispositif selon la revendication 26, **caractérisé en ce que** les tronçons de support de mesure (761) individuels sont montés sur une ou plusieurs parties en saillie (703) du support (700) et qu'une partie des parties en saillie (703) ou toutes les parties en saillie (703) sont logées sur le support (700) de manière à pouvoir pivoter autour d'un troisième axe de rotation (704) dirigé dans le sens horizontal.

28. Dispositif selon la revendication 27, **caractérisé en ce que** les tronçons de support de mesure (761) sont à chaque fois logés de manière à pouvoir tourner autour d'un quatrième axe de rotation (705) supplémentaire parallèle au troisième axe de rotation (704).

29. Procédé selon l'une des revendications 1 à 4 et/ou dispositif selon l'une des revendications 5 à 28, **caractérise par** l'application lors du transport sur palettes de récipients de boisson disposés les uns à côté des autres et/ou les uns au-dessus des autres, plus particulièrement des barillets ou des caisses de boisson ou des fûts.
